# EUROPÄISCHE PATENTSCHRIFT

(11) **EP 2 627 541 B1**
(45) Veröffentlichungstag und Bekanntmachung des Hinweises auf die Patenterteilung: **25.07.2018**
(21) Anmeldenummer: 11813864.3
(22) Anmeldetag: 27.09.2011
(51) Int. Cl.: B60R 21/264

(54) **GASGENERATOR UND GASSACKMODUL**
GAS GENERATOR AND AIRBAG MODULE
GÉNÉRATEUR DE GAZ ET MODULE COUSSIN GONFLABLE

(30) Priorität: 15.10.2010 DE 202010014286 U
(43) Veröffentlichungstag der Anmeldung: 21.08.2013
(73) Patentinhaber: TRW Airbag Systems GmbH, 84544 Aschau am Inn (DE)
(72) Erfinder: BIERWIRTH, Sebastian, 83562 Rechtmehring (DE); HOFMANN, Achim, 84577 Tüssling (DE); NEUMAYER, Hans-Peter, 84539 Ampfing (DE); SPITZENBERGER, Dieter, 84559 Kraiburg (DE); NUIDING, Hannes, 73667 Kaiserbach (DE); SCHOBER, Thomas, 83527 Haag (DE); BOMMER, Josef, 83564 Soyen (DE); BREDDERMANN, Tobias, 84453 Mühldorf am Inn (DE); SCHWEBEL, Dietmar, 84544 Aschau a. Inn (DE)
(74) Vertreter: ZF TRW Patentabteilung
(86) Internationale Anmeldenummer: PCT/DE2011/001820
(87) Internationale Veröffentlichungsnummer: WO 2012/062262

(56) Entgegenhaltungen:
- EP-A1- 0 704 348
- EP-A1- 0 844 147
- EP-A1- 0 879 739
- EP-A1- 0 926 461
- EP-A1- 1 106 445
- EP-A1- 1 136 330
- EP-A1- 1 155 927
- EP-A1- 1 217 325
- EP-A1- 1 568 547
- EP-A1- 1 571 050
- EP-A2- 0 773 145
- WO-A1-2009/146221
- DE-A1- 4 141 905
- DE-A1- 4 419 549
- DE-A1- 10 125 354
- DE-A1- 19 757 478
- DE-A1- 19 923 931
- DE-A1-102008 033 442
- DE-A1-102008 049 652
- DE-A1-102008 060 305
- DE-C1- 3 924 500
- DE-U1- 20 320 653
- US-A- 5 366 239
- US-A1- 2002 105 174
- US-A1- 2002 162 476
- US-A1- 2003 051 630
- US-A1- 2007 001 439
- US-A1- 2007 120 349
- US-A1- 2010 253 055
- US-B1- 6 196 581
- US-B1- 6 299 200
- US-B1- 6 422 146

## Beschreibung

Die Erfindung betrifft einen Gasgenerator für eine Schutzeinrichtung in einem Fahrzeug nach dem Oberbegriff des Patentanspruchs 1. Die Erfindung betrifft ferner ein Gassackmodul für ein Fahrzeug.

Ein solcher Gasgenerator umfasst einen mit einem Treibstoff gefüllten Treibstoffkanister mit einem Treibstoffkanisterboden und einer dem Treibstoffkanisterboden entgegengesetzten Treibstoffkanisteröffnung, die mittels eines Brennkammerbauteils geschlossen ist, wobei das Brennkammerbauteil eine Brennkammerhülse ist, die eine einer bestimmten Aktivierungsstufe des Gasgenerators zugeordnete Brennkammer wenigstens teilweise umschließt, wobei die Brennkammerhülse eine Brennkammerhülsenöffnung oder eine offene Seite und einen dazu entgegengesetzten Brennkammerhülsenboden aufweist, der die Treibstoffkanisteröffnung abdeckt, wobei am Brennkammerhülsenboden ein zweiter Füllkörper angeordnet ist.

Ein derartiger Gasgenerator ist beispielsweise in der DE 41 41 905 A1 gezeigt.

Die Anforderungen an die Effektivität eines Gasgenerators sind generell sehr hoch. In kürzester Zeit muss eine bestimmte Menge an Gas bereitgestellt werden, das nicht zu heiß und möglichst partikelfrei sein soll. Ein Gasgenerator sollte auch möglichst leicht sein und wenig Bauraum in Anspruch nehmen, damit z. B. im Falle des Einbaus in einem Lenkrad bestimmte Vorgaben des Lenkraddesigns eingehalten werden können.

Der Erfindung liegt daher die Aufgabe zugrunde, einen kompakten und effektiven Gasgenerator mit einem sehr effizienten Aufbau, der den obigen Anforderungen genügt, zu schaffen.

Für einen Gasgenerator der eingangs genannten Art wird diese Aufgabe erfindungsgemäß durch die kennzeichnenden Merkmale des Patentanspruchs 1 gelöst.

Erfindungsgemäß ist der Gasgenerator also derart ausgestaltet, dass im Treibstoffkanisterboden eine zentrale Treibstoffkanisterbodenöffnung zur Aufnahme eines Trägerbauteils gebildet ist und der Treibstoffkanister und die Brennkammerhülse zwei offene, im Wesentlichen zylindrische Hülsen sind, die entgegengesetzt orientiert ineinandergesteckt sind, sodass sich eine innere oder äußere Mantelfläche des Treibstoffkanisters und eine äußere bzw. innere Mantelfläche der Brennkammerhülse im Wesentlichen über die gesamte axiale Länge der Mantelflächen überdecken, wobei die Brennkammerhülse außenseitig auf den Treibstoffkanister aufgeschoben ist.

Ein Vorzug dieser Gestaltung ist, dass die Brennkammerhülse nicht in Kontakt mit dem Treibstoff kommt, um eine Beschädigung des Treibstoffs und/oder eine Behinderung beim Aufschieben der Brennkammerhülse auszuschließen.

Zur Verstärkung des Treibstoffkanisters kann dieser in der Nähe der Treibstoffkanisteröffnung eine Sicke oder Rippe aufweisen, die vorzugsweise, bezogen auf eine Mittelachse des Treibstoffkanisters, in Umfangsrichtung vollständig umläuft. Dadurch kann einer unerwünschten Deformierung bei der Handhabung des Treibstoffkanisters entgegengewirkt werden.

Zur Anbringung des Treibstoffkanisters im Gasgenerator kann im Treibstoffkanisterboden vorteilhaft eine zentrale Treibstoffkanisterbodenöffnung zur Aufnahme eines Anzünderträgers gebildet sein.

Um eine stabile Halterung des Treibstoffkanisters zu ermöglichen, ist Treibstoffkanisterbodenöffnung durch einen vorzugsweise umgebogenen inneren Randabschnitt des Treibstoffkanisterbodens gebildet, der sich vom Treibstoffkanisterboden in das Innere des Treibstoffkanisters erstreckt. Der Randabschnitt kann sich an einer Haltefläche des Trägerbauteils abstützen.

Damit das beim Abbrand des Treibstoffs im Treibstoffkanister entstehende Gas aus dem Treibstoffkanister entweichen kann, sind vorzugsweise im Treibstoffkanisterboden mehrere Löcher gebildet.

Dagegen ist die Brennkammerhülse, abgesehen von der Brennkammerhülsenöffnung bzw. der offenen Seite, vorzugsweise lochfrei.

Gemäß einer bevorzugten Art der Befestigung ist die Brennkammerhülse auf einen Anzünderträger aufgesteckt, sodass bei entsprechender Auslegung als Presspassung keine weitere Befestigungsmaßnahme notwendig ist.

Bevorzugte Materialien für den Treibstoffkanister sind Aluminium, Kupfer, Kunststoff oder Stahl; die Brennkammerhülse ist bevorzugt aus Stahl gebildet.

Eine definierte Anordnung der Brennkammerhülse relativ zum Treibstoffkanister wird bevorzugt dadurch erreicht, dass zumindest ein Teil einer sich zwischen der Treibstoffkanisteröffnung und dem Treibstoffkanisterboden erstreckenden Seitenwand des Treibstoffkanisters zumindest einem Teil einer sich zwischen der Brennkammerhülsenöffnung bzw. der offenen Seite der Brennkammerhülse und dem Brennkammerhülsenboden erstreckenden Seitenwand der Brennkammerhülse unmittelbar gegenüberliegt.

In einer Ausführungsform der Erfindung kann der Gasgenerator einen Diffusor umfassen, der vorzugsweise mit einem Verschlusskörper ein im Wesentlichen rotationssymmetrisches Außengehäuse des Gasgenerators bildet. Der Diffusor weist mehr als 12, vorzugsweise mehr als 14, weiter vorzugsweise 23 Ausströmöffnungen auf, die in einer Reihe angeordnet sind. Die hohe Zahl von Ausströmöffnungen sorgt für eine gleichmäßige Gasausströmung in den Gassack. Außerdem erlaubt die Anordnung der Ausströmöffnungen in einer Reihe eine einfach zu gestaltende Verdämmung auf der Innenseite des Diffusors, z. B. durch ein schmales Verdämmband.

Ist die Anzahl der Ausströmöffnungen in der Reihe groß genug gewählt, reicht es aus, dass der Diffusor nur eine einzige Reihe von Ausströmöffnungen aufweist.

Insbesondere kann es bei einer Ausführungsform der Erfindung sein, dass der Diffusor - bezogen auf eine Mittelachse A des Diffusors - von einem Befestigungsflansch des Gasgenerators ringförmig umgeben ist.

Insbesondere kann eine effiziente Ausgestaltung des erfindungsgemäßen Gasgenerators vorsehen, dass das Verhältnis des Außenumfangs des Diffusors in mm zu der Anzahl der Ausströmöffnungen in der Reihe kleiner als 16,5, vorzugsweise kleiner als 14,1, weiter vorzugsweise kleiner als 9,85 ist, weiter vorzugsweise zwischen 7,57 und 9,85, weiter vorzugsweise zwischen 8,20 und 8,96 liegt und weiter vorzugsweise etwa 8,56 beträgt.

Ein besonders günstiges Gasausströmverhalten ergibt sich dadurch, dass die Ausströmöffnungen wenigstens zwei, vorzugsweise drei unterschiedliche Strömungsquerschnitte haben, wobei die Ausströmöffnungen vorzugsweise kreisförmig sind und die unterschiedlichen Strömungsquerschnitte durch unterschiedliche Durchmesser der kreisförmigen Ausströmöffnungen bestimmt sind.

Gemäß einer vorteilhaften Ausgestaltung haben, bezogen auf eine Mittelachse des Diffusors, gegenüberliegende Ausströmöffnungen den gleichen Strömungsquerschnitt. Dies gilt natürlich nur für Ausströmöffnungen, denen tatsächlich eine andere Ausströmöffnung gegenüberliegt.

Eine weitere vorteilhafte Ausgestaltung sieht vor, dass unmittelbar benachbarte Ausströmöffnungen unterschiedliche Strömungsquerschnitte haben.

In einer bevorzugten Ausführungsform der Erfindung haben die Ausströmöffnungen wenigstens drei unterschiedliche Strömungsquerschnitte. In der Reihe der Ausströmöffnungen ist zumindest teilweise eine sich wiederholende Abfolge der Art folgenden Art vorgesehen: erster Strömungsquerschnitt, zweiter Strömungsquerschnitt, erster Strömungsquerschnitt, dritter Strömungsquerschnitt. Vorzugsweise ist der erste Strömungsquerschnitt ein kleiner, der zweite Strömungsquerschnitt ein mittlerer und der dritte Strömungsquerschnitt ein großer Strömungsquerschnitt.

Außerdem sieht die bevorzugte Ausführungsform der Erfindung vor, dass das Verhältnis des Außenumfangs des Diffusors in mm zur Anzahl der Ausströmöffnungen mit dem kleinem Strömungsquerschnitt kleiner als 19,7 ist, vorzugsweise zwischen 15,1 und 19,7 liegt und weiter vorzugsweise etwa 17,9 beträgt.

Hinsichtlich der anderen Strömungsquerschnitte sieht die bevorzugte Ausführungsform der Erfindung vor, dass das Verhältnis des Außenumfangs des Diffusors in mm zur Anzahl der Ausströmöffnungen mit dem mittleren Strömungsquerschnitt und/oder zur Anzahl der Ausströmöffnungen mit dem großen Strömungsquerschnitt kleiner als 39,4 ist, vorzugsweise zwischen 28,2 und 39,4 liegt und weiter vorzugsweise etwa 32,8 beträgt.

Bezüglich der Gasausströmung ist ein Verhältnis des Gesamtströmungsquerschnitts aller Ausströmöffnungen der Reihe in mm² zum Außenumfang des Diffusors in mm vorteilhaft, das größer als 110 ist, vorzugsweise zwischen 110 und 139 liegt und weiter vorzugsweise etwa 124 beträgt.

Die Abstände zwischen benachbarten Ausströmöffnungen in der Reihe sind vorzugsweise gleich groß.

Gemäß einer besonderen Anordnung der Ausströmöffnungen verläuft die Reihe der Ausströmöffnungen bezüglich einer Mittelachse des Diffusors in Umfangsrichtung und hat einen Anfang mit einer ersten Ausströmöffnung sowie ein Ende mit einer letzten Ausströmöffnung. Der Abstand zwischen der ersten und der letzten Ausströmöffnung ist größer, vorzugsweise doppelt so groß wie der Abstand zwischen benachbarten Ausströmöffnungen in der Reihe. Es wird also bewusst eine Ausströmöffnung "ausgelassen".

In diesem Fall beträgt der Winkelabstand zwischen benachbarten Ausströmöffnungen 360° / (n + 1), wenn n die Anzahl der Ausströmöffnungen in der Reihe ist.

Zwischen dem Anfang und dem Ende der Reihe, also in dem Bereich, in dem bewusst keine Ausströmöffnung vorgesehen ist, kann ein Stoß eines Verdämmbandes angeordnet sein.

Gemäß einer weiteren Ausführungsform kann der Gasgenerator einen, bezogen auf eine Mittelachse des Gasgenerators, radial abstehenden Generatorflansch zur Befestigung des Gasgenerators an einem Generatorträger umfassen. Der Generatorflansch hat im Wesentlichen die Form eines Rechtecks. Die rechteckige Gestaltung des Generatorflanschs ermöglicht eine platzsparende Gestaltung des Generatorträgers und des den Gasgenerator umgebenden Bauraums, insbesondere dann, wenn der Flansch nur geringfügig breiter als der Außendurchmesser des Außengehäuses des Gasgenerators ist. Unter einer im Wesentlichen rechteckigen Form ist dabei nicht unbedingt ein perfektes Rechteck zu verstehen; grundsätzlich rechteckige Formen mit abgerundeten Ecken, randseitigen Ausnehmungen, etc. sollen mit umfasst sein.

Bei einem bevorzugten Design ist vorgesehen, dass der Gasgenerator ein Außengehäuse mit einem vorzugsweise kreisförmigen Querschnitt hat, dessen Mittelachse durch den Mittelpunkt des Generatorflanschs verläuft.

Bezüglich der Dimensionen des Generatorflanschs hat sich für die Anbringung des Gasgenerators am Generatorträger ein Verhältnis von Länge zu Breite des Rechtecks zwischen 1,12 und 1,31, vorzugsweise zwischen 1,16 und 1,27 als vorteilhaft herausgestellt. Weiter vorzugsweise beträgt dieses Verhältnis etwa 1,21.

Ebenfalls bevorzugt wird ein Verhältnis der Länge des Rechtecks zum Außendurchmesser des Außengehäuses, das zwischen 1,24 und 1,48, vorzugsweise zwischen 1,30 und 1,42 liegt und weiter vorzugsweise etwa 1,36 beträgt.

Bezüglich der Breite des Generatorflanschs wird ein Verhältnis der Breite b des Rechtecks zum Außendurchmesser a des Außengehäuses bevorzugt, das zwischen 1,01 und 1,23, vorzugsweise zwischen 1,06 und 1,17 liegt und weiter vorzugsweise etwa 1,12 beträgt.

Weitere bevorzugte Ausführungsformen der Erfindung sind Gegenstand der Unteransprüche.

Im Folgenden wird die Erfindung mit weiteren Einzelheiten anhand der beigefügten Zeichnung näher erläutert. Darin zeigen:
- Figur 1 eine geschnittene Seitenansicht eines erfindungsgemäßen Gasgenerators nach einer ersten Bauform;
- Figur 2 eine geschnittene Seitenansicht eines erfindungsgemäßen Gasgenerators nach einer zweiten Bauform;
- Figur 3 eine geschnittene Draufsicht auf einen Diffusor eines erfindungsgemäßen Gasgenerators;
- Figur 4 eine geschnittene Seitenansicht des Diffusors aus Figur 3;
- Figur 5 eine geschnittene Draufsicht auf einen Diffusor eines erfindungsgemäßen Gasgenerators;
- Figur 6 eine seitliche Schnittansicht eines Anzünderträgers eines erfindungsgemäßen Gasgenerators;
- Figur 7 den Anzünderträger aus Figur 6 mit eingelegtem Dichtring;
- Figur 8 den Anzünderträger aus Figur 7 mit eingesetztem Anzünder;
- Figur 9 den Anzünderträger und den Anzünder aus Figur 9 im vormontierten Zustand;
- Figur 10 eine seitliche Schnittansicht eines Verschlusskörpers eines erfindungsgemäßen Gasgenerators;
- Figur 11 den Verschlusskörper aus Figur 10 mit eingesetzten Anzündereinheiten;
- Figur 12 eine Teildraufsicht auf den Verschlusskörper und die Anzündereinheiten aus Figur 11;
- Figur 13 eine perspektivische Ansicht einer Anzünderhülse eines erfindungsgemäßen Gasgenerators nach einer ersten Ausführungsvariante;
- Figur 14 eine seitliche Schnittansicht der Anzünderhülse aus Figur 13;
- Figur 15 eine Schnittansicht entlang der Schnittlinie A-A in Figur 14;
- Figur 16 eine seitliche Schnittansicht einer Anzünderhülse nach einer zweiten Ausführungsvariante;
- Figur 17 eine seitliche Schnittansicht einer Anzünderhülse nach einer dritten Ausführungsvariante;
- Figur 18 eine Schnittansicht entlang der Schnittlinie A-A in Figur 17;
- Figur 19 eine perspektivische Ansicht einer Anzünderhülse nach einer vierten Ausführungsvariante;
- Figur 20 eine seitliche Schnittansicht der Anzünderhülse aus Figur 19;
- Figur 21 eine Schnittansicht entlang der Schnittlinie A-A in Figur 20;
- Figur 22 eine Schnittansicht entlang der Schnittlinie C-C in Figur 20;
- Figur 23 eine perspektivische Ansicht einer Anzünderhülse nach einer fünften Ausführungsvariante;
- Figur 24 eine seitliche Schnittansicht der Anzünderhülse aus Figur 23;
- Figur 25 eine Schnittansicht entlang der Schnittlinie A-A in Figur 24;
- Figur 26 eine Schnittansicht entlang der Schnittlinie C-C in Figur 25;
- Figur 27 eine in einem unteren Bereich des Gasgenerators teilweise geschnittene Draufsicht auf einen erfindungsgemäßen Gasgenerator;
- Figur 28 eine teilweise geschnittene perspektivische Ansicht eines erfindungsgemäßen Gasgenerators ohne Diffusor;
- Figur 29 eine seitliche Schnittansicht eines erfindungsgemäßen Gasgenerators nach der zweiten Bauform nach Aktivierung der zweiten Aktivierungsstufe;
- Figur 30 eine seitliche Schnittansicht eines erfindungsgemäßen Gasgenerators ohne Diffusor und Füllkörper;
- Figur 31 einen Ausschnitt einer seitlichen Schnittansicht eines erfindungsgemäßen Gasgenerators;
- Figur 32 eine Draufsicht auf ein Füllkörperteil für die erste Brennkammer eines erfindungsgemäßen Gasgenerators nach einer Ausführungsvariante;
- Figur 33 eine perspektivische Ansicht des Füllkörperteils aus Figur 32;
- Figur 34 eine in einem oberen Bereich des Gasgenerators geschnittene Draufsicht auf einen erfindungsgemäßen Gasgenerator;
- Figur 35 eine Draufsicht auf einen Filter eines erfindungsgemäßen Gasgenerators;
- Figur 36 eine Schnittansicht des Filters entlang der Linie A-A in Figur 35; und
- Figur 37 eine schematische seitliche Schnittansicht eines erfindungsgemäßen Gasgenerators nach der ersten Bauform in einer Ausführungsvariante.

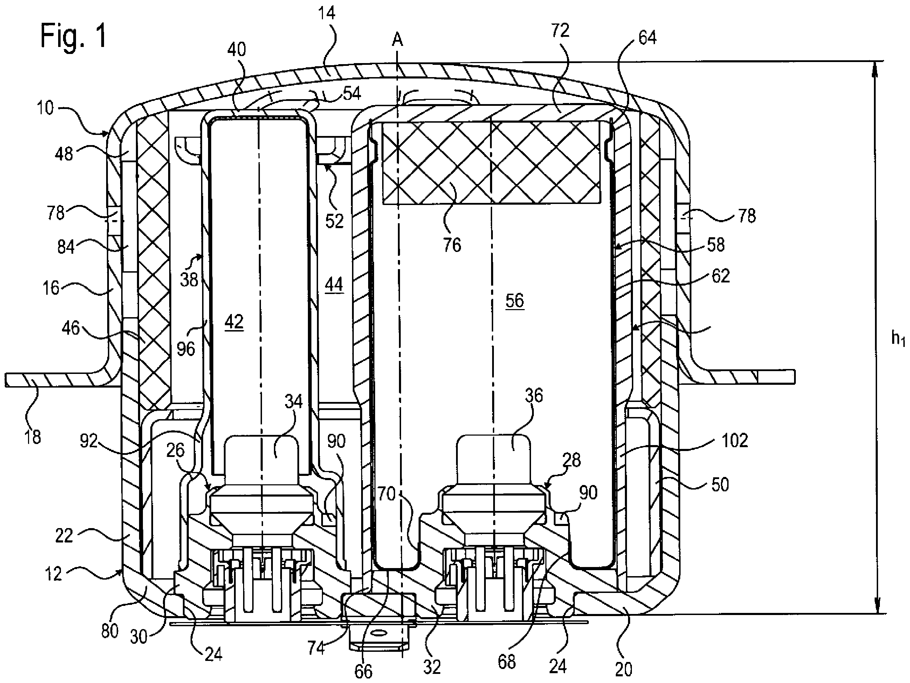

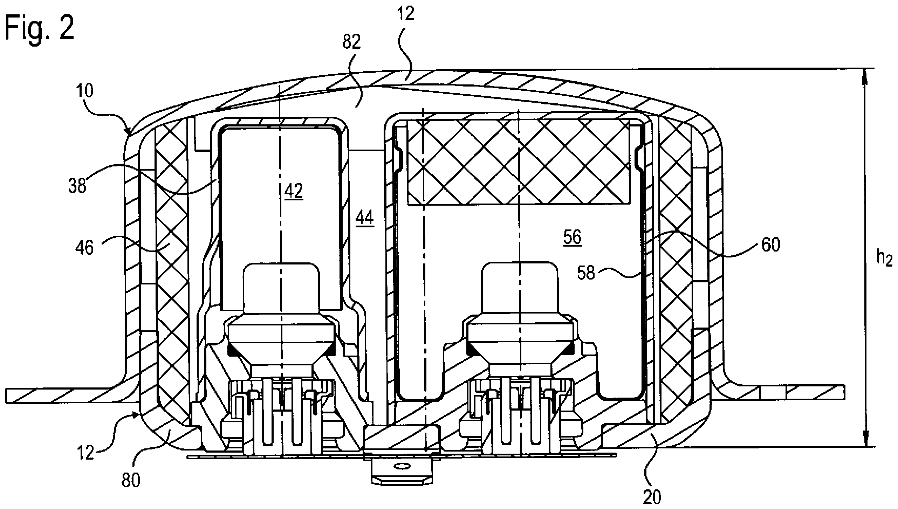

In der nachfolgenden detaillierten Beschreibung bevorzugten Ausführungsformen und -varianten der Erfindung werden zur Erleichterung des Verständnisses Angaben wie oben, unten, etc. verwendet. Diese Angaben beziehen sich auf eine Orientierung des Gasgenerators, wie er in den Figuren 1 und 2 dargestellt ist.

In Figur 1 ist ein Gasgenerator, der Teil eines Gassackmoduls mit einem aufblasbaren Gassack ist, nach einer ersten Bauform dargestellt. Der Gasgenerator umfasst ein Außengehäuse, das sich aus einem topfförmigen Diffusor 10 und einem Verschlusskörper 12 zusammensetzt.

Der Diffusor 10 hat einen gewölbten Deckenabschnitt 14 und eine daran anschließende, im Wesentlichen zylindrische Umfangswand 16. Von der dem Deckenabschnitt 14 abgewandten Seite der Umfangswand 16 erstreckt sich ein Generatorflansch 18 radial nach außen. Der Generatorflansch 18 soll im Folgenden nicht als Bestandteil des Außengehäuses angesehen werden.

Der Verschlusskörper 12 hat einen im Wesentlichen ebenen Boden 20 und einen außen umlaufenden, hochgezogenen Rand 22, der an der Innenseite der Umfangswand 16 des Diffusors 10 anliegt. Die Wanddicke des Verschlusskörpers 12 ist wenigstens abschnittsweise größer als die des Diffusors 10. Insbesondere der Boden 20 des Verschlusskörpers 12 ist dicker als die Umfangswand 16 und der Deckenabschnitt 14 des Diffusors 10.

Das aus dem Diffusor 10 (ohne Generatorflansch 18) und dem Verschlusskörper 12 gebildete Außengehäuse ist bezüglich der Mittelachse A des Gasgenerators im Wesentlichen rotationssymmetrisch, wie es für sogenannte "disk-shape"-Gasgeneratoren, zu denen auch der Gegenstand der Erfindung zählt, üblich ist. Die Mittelachse A des Gasgenerators fällt somit mit der Mittelachse des Diffusors 10 und des Verschlussköpers 12 zusammen.

Der Verschlusskörper 12 hat zwei von der Mittelachse A des Gasgenerators unterschiedlich weit beabstandete Bodenöffnungen 24, die zur Aufnahme vormontierter Anzündereinheiten 26, 28 dienen. Beide Anzündereinheiten 26,28 umfassen einen Anzünderträger 30 bzw. 32 und einen in diesen eingesetzten Anzünder 34 bzw. 36.

Die erste (in Figur 1 linke) Anzündereinheit 26 ist einer ersten Aktivierungsstufe des Gasgenerators zugeordnet. Auf einen Aufnahmeabschnitt des ersten Anzünderträgers 30 ist eine einseitig offene Anzünderhülse 38 aufgesteckt, deren Boden 40 dem Deckenabschnitt 14 des Diffusors 10 gegenüberliegt. Zwischen Anzünderhülse 38 und erstem Anzünderträger 30 besteht eine Presspassung, sodass keine weitere Befestigungsmaßnahme (Schweißen, etc.) notwendig ist. Die Anzünderhülse 38 umgibt eine Anzünderkammer 42, in die der erste Anzünder 34 hineinragt. Die Anzünderkammer 42 ist mit einer Verstärkerladung (nicht gezeigt), insbesondere in Tablettenform, gefüllt.

Die Anzünderhülse 38 ist vollständig von einer ersten Brennkammer 44 umgeben, die mit einem Treibstoff (nicht gezeigt), insbesondere in Tablettenform, gefüllt ist. Wie in Figur 1 zu erkennen ist, verjüngt sich der Durchmesser der Anzünderhülse 38 zu ihrem Boden 40 hin stufenweise. Die Verjüngung lässt im Vergleich zu einer Anzünderhülse mit konstantem Durchmesser mehr Raum für Treibstoff in der ersten Brennkammer 44.

Die erste Brennkammer 44 ist axial durch den Deckenabschnitt 14 des Diffusors 10 und den Boden 20 des Verschlusskörpers 12 begrenzt. Radial ist die erste Brennkammer 44 durch einen vollständig umlaufenden, ringförmigen Filter 46 begrenzt, der entlang der Innenseite des hochgezogenen Rands 22 des Verschlusskörpers 12 bzw. entlang der Innenseite der Umfangswand 16 des Diffusors 10 verläuft, wobei zwischen dem Filter 46 und der Umfangswand 16 ein Ringspalt 48 gebildet ist.

Unterhalb des Filters 46 ist die erste Brennkammer 44 in radialer Richtung durch ein Stützelement 50 begrenzt, auf dem sich der Filter 46 axial abstützt. Im Falle eines nicht vollständig umlaufend ausgebildeten Stützelements 50 ist die erste Brennkammer 44 in den dazwischenliegenden Bereichen durch den Rand 22 des Verschlusskörpers 12 begrenzt. Dadurch, dass sich der Filter 46 nicht bis zum Boden 20 des Verschlusskörpers 12 erstreckt, können Kosten für zusätzliches Filtermaterial und Gewicht eingespart werden.

Zwischen dem Treibstoff der ersten Brennkammer 44 und dem Deckenabschnitt 14 des Diffusors 10 ist ein erster Füllkörper 52 angeordnet. Gemäß der in Figur 1 dargestellten ersten Ausführungsvariante ist der erste Füllkörper 52 aus Streckmetall gebildet (Maschengestrick) und weist elastische, fingerförmige Abschnitte 54 auf, die sich zum Deckenabschnitt 14 des Diffusors 10 hin abstützen.

Der zweite (in Figur 1 rechte) Anzünder 36 ragt in eine zweite Brennkammer 56, die wenigstens teilweise von der ersten Brennkammer 44 umgeben ist. Die zweite Brennkammer 56 ist im Wesentlichen durch einen Treibstoffkanister 58 aus Aluminium, Kupfer, Kunststoff oder Stahl und eine den Treibstoffkanister 58 umgebende Brennkammerhülse 60 aus Stahl begrenzt.

Der Treibstoffkanister 58 hat eine im Wesentlichen zylindrische Seitenwand 62. Auf einer dem Deckenabschnitt 14 des Diffusors 10 zugewandten axialen Stirnseite weist der Treibstoffkanister 58 eine Treibstoffkanisteröffnung 64 auf; im dargestellten Ausführungsbeispiel ist diese Stirnseite vollständig offen. Auf der entgegengesetzten Stirnseite weist der Treibstoffkanister 58 einen Treibstoffkanisterboden 66 mit einer zentralen Treibstoffkanisterbodenöffnung 68 auf. Die Treibstoffkanisterbodenöffnung 68 ist durch einen umgebogenen inneren Randabschnitt 70 gebildet, der sich vom Treibstoffkanisterboden 66 in das Innere des Treibstoffkanisters 58 erstreckt. Der Treibstoffkanisterboden 66 mit dem umgebogenen inneren Randabschnitt 70 stützt sich an einem oberen Aufnahmeabschnitt des zweiten Anzünderträgers 32 ab. Zwischen Treibstoffkanister 58 und zweitem Anzünderträger 32 besteht eine Presspassung, sodass keine weitere Befestigungsmaßnahme (Schweißen, etc.) notwendig ist.

Auf den Treibstoffkanister 58 ist die Brennkammerhülse 60 in umgekehrter Orientierung so aufgeschoben, dass ein Brennkammerhülsenboden 72, der dem Deckenabschnitt 14 des Diffusors 10 gegenüberliegt, die offene Seite des Treibstoffkanisters 58 vollständig verschließt. Der freie Rand 74 auf der offenen Seite der Brennkammerhülse 60 ist auf einen unteren Aufnahmeabschnitt des zweiten Anzünderträgers 32 aufgesteckt. Zwischen Brennkammerhülse 60 und zweitem Anzünderträger 32 besteht eine Presspassung, sodass keine weitere Befestigungsmaßnahme (Schweißen, etc.) notwendig ist.

Am Brennkammerhülsenboden 72 ist ein fest mit diesem verbundener zweiter Füllkörper 76 angeordnet, der in den Treibstoffkanister 58 hineinragt. Ansonsten ist die zweite Brennkammer 56 mit Treibstoff (nicht gezeigt), insbesondere in Tablettenform, gefüllt.

Nachfolgend wird die grundlegende Funktionsweise des Gasgenerators beschrieben. Besonderheiten der Funktionsweise werden später detailliert erläutert.

Wie bereits erwähnt, ist der Gasgenerator zweistufig konzipiert. Bei Aktivierung der ersten Stufe zündet der erste Anzünder 34 die Verstärkerladung in der Anzünderkammer 42. Während des Abbrands der Verstärkerladung treten "Anzündstrahlen" (Heißgas) aus Überströmöffnungen der Anzünderhülse 38 (in Figur 1 nicht zu sehen), auf die später noch genauer eingegangen wird, in die erste Brennkammer 44 ein und entzünden den darin befindlichen Treibstoff. Das beim Abbrand entstehende Gas strömt durch den Filter 46, der das Gas kühlt und von Partikeln befreit, und anschließend durch Ausströmöffnungen 78 des Diffusors 10, auf die später ebenfalls noch genauer eingegangen wird, in den Gassack.

Bei einer Aktivierung der zweiten Stufe, die in Abhängigkeit von der erkannten Unfallsituation und der Aktivierungssteuerung grundsätzlich nach, vor oder unabhängig von der ersten Stufe erfolgen kann, zündet der zweite Anzünder 36 den Treibstoff in der zweiten Brennkammer 56. Das beim Abbrand des Treibstoffs entstehende Gas kann durch einen besonderen Mechanismus, der später noch genauer erläutert wird, aus der zweiten Brennkammer 56 in die erste Brennkammer 44 entweichen. Von dort gelangt das Gas durch den Filter 46 und die Ausströmöffnungen 78 in den Gassack.

Der in Figur 1 gezeigte Aufbau des Gasgenerators (erste, "hohe" Bauform) ermöglicht das Aufblasen eines Gassacks mit einem Volumen von 60 bis zu 135 Liter und ist somit insbesondere für Beifahrer-Gassackmodule geeignet.

Die Bauhöhe des Gasgenerators, insbesondere die axiale Höhe h1 des Außengehäuses, liegt bei der ersten Bauform zwischen 50 und 70 mm und beträgt beim dargestellten Ausführungsbeispiel gemäß Figur 1 etwa 60 mm.

Bei der ersten Bauform des Gasgenerators liegt das Verhältnis des Volumens der ersten Brennkammer 44 zum Volumen der zweiten Brennkammer 56 zwischen 2,34 und 3,27, vorzugsweise zwischen 2,54 und 3,00. Beim dargestellten Ausführungsbeispiel gemäß Figur 1 beträgt dieses Verhältnis etwa 2,76.

Bei der ersten Bauform des Gasgenerators liegt das Verhältnis des Volumens der ersten Brennkammer 44 zum Volumen der Anzünderhülse 38 zwischen 13,5 und 31,0, vorzugsweise zwischen 16,0 und 24,0. Beim dargestellten Ausführungsbeispiel gemäß Figur 1 beträgt dieses Verhältnis etwa 19,3.

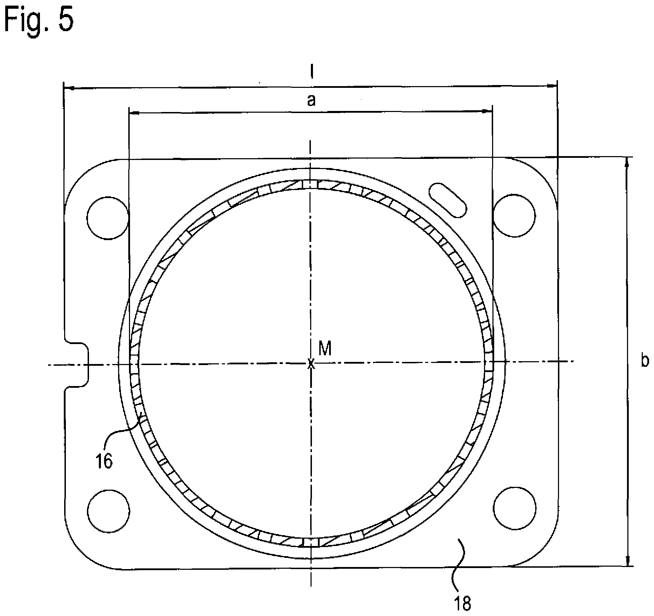

Bei der ersten Bauform des Gasgenerators liegt das Verhältnis des Außendurchmessers a des Außengehäuses des Gasgenerators (ohne Generatorflansch 18, siehe Figur 5) zur Höhe h1 des Außengehäuses zwischen 0,94 und 1,16 und beträgt beim dargestellten Ausführungsbeispiel gemäß Figur 1 etwa 1,05.

In Figur 2 ist eine zweite Bauform des Gasgenerators gezeigt, die im Vergleich zur ersten Bauform eine deutlich niedrigere Bauhöhe hat und dementsprechend auch als "flache" Bauform bezeichnet wird. Der Aufbau des Gasgenerators ist bei beiden Bauformen im Wesentlichen gleich mit einigen Ausnahmen. Auf die wichtigsten Unterschiede wird nachfolgend eingegangen.

Im Vergleich zur ersten Bauform sind bei der zweiten Bauform die axialen Ausdehnungen des Verschlusskörpers 12, der Anzünderhülse 38, des Treibstoffkanisters 58, der Brennkammerhülse 66, der Anzünderkammer 42 sowie der beiden Brennkammern 44, 56 reduziert.

Bei der zweiten Bauform erstreckt sich der Filter 46 vom Deckenabschnitt 14 des Diffusors 10 bis zum Bodenbereich des Verschlusskörpers 12. An seinem unteren Ende stützt sich der Filter 46 axial an einem schrägen Übergangsbereich 80 des Verschlusskörpers 12 ab, weshalb ein separates Stützelement für den Filter 46 wie bei der ersten Bauform hier nicht vorgesehen ist.

Anstelle des ersten Füllkörpers 52 aus Streckmetall mit den elastischen fingerförmigen Abschnitten 54 ist gemäß einer zweiten Ausführungsvariante ein flacher erster Füllkörper 82 aus nachgiebigem Silikon vorgesehen. Die in Figur 2 gezeigte Ausführungsvariante des ersten Füllkörpers 82 kann aber auch bei der ersten Bauform eingesetzt werden. Auf die zweite Ausführungsvariante des ersten Füllkörpers 82 wird später noch genauer eingegangen.

Der in Figur 2 gezeigte Aufbau des Gasgenerators (zweite, "flache" Bauform) ermöglicht das Aufblasen eines Gassacks mit einem Volumen von 40 bis zu 60 Liter und ist somit insbesondere für Fahrer-Gassackmodule geeignet.

Die Bauhöhe des Gasgenerators, insbesondere die axiale Höhe h2 des Außengehäuses, liegt bei der zweiten Bauform zwischen 30 und 50 mm und beträgt beim dargestellten Ausführungsbeispiel gemäß Figur 2 etwa 40 mm.

Bei der zweiten Bauform des Gasgenerators liegt das Verhältnis des Volumens der ersten Brennkammer 44 zum Volumen der zweiten Brennkammer 56 zwischen 2,07 und 3,78, vorzugsweise zwischen 2,41 und 3,21. Beim dargestellten Ausführungsbeispiel gemäß Figur 2 beträgt dieses Verhältnis etwa 2,82.

Bei der zweiten Bauform des Gasgenerators liegt das Verhältnis des Volumens der ersten Brennkammer 44 zum Volumen der Anzünderhülse 38 zwischen 9,00 und 35,0, vorzugsweise zwischen 11,6 und 22,0. Beim dargestellten Ausführungsbeispiel gemäß Figur 2 beträgt dieses Verhältnis etwa 15,5.

Bei der zweiten Bauform des Gasgenerators liegt das Verhältnis des Außendurchmessers a des Außengehäuses des Gasgenerators zur Höhe h2 des Außengehäuses zwischen 1,38 und 1,78 und beträgt beim dargestellten Ausführungsbeispiel gemäß Figur 2 etwa 1,57.

Nachfolgend werden verschiedene Besonderheiten des in den Figuren 1 und 2 gezeigten Gasgenerators beschrieben.

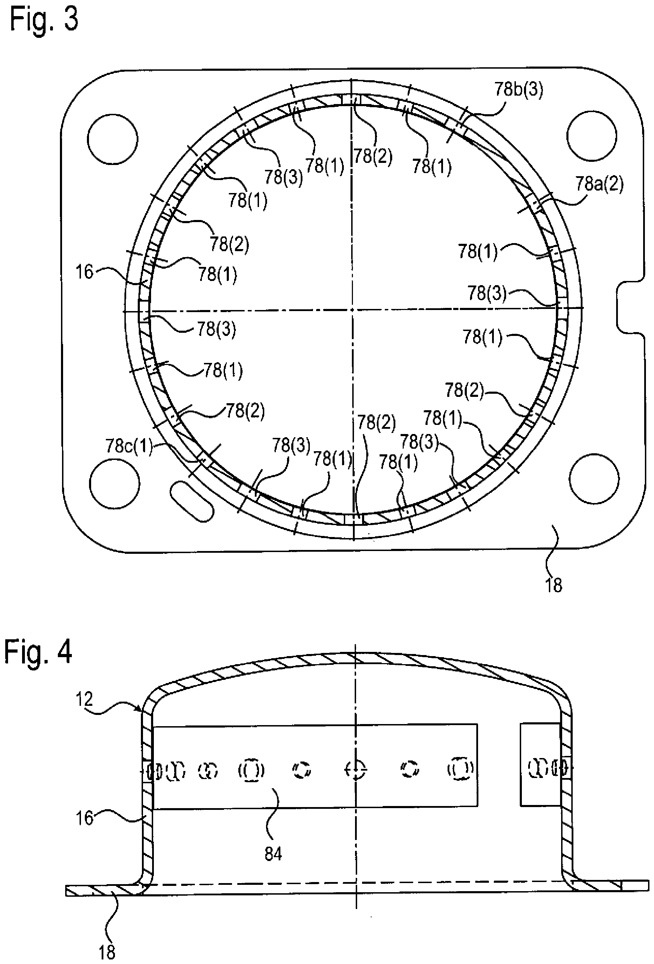

Die Figuren 3 und 4 zeigen den Diffusor 10 des Gasgenerators, der mit Ausnahme des Generatorflanschs 18 im Wesentlichen rotationssymmetrisch geformt ist. In der Umfangswand 16, die im Wesentlichen parallel zur Mittelachse A verläuft, ist eine Vielzahl von Ausströmöffnungen 78 vorgesehen. Die Ausströmöffnungen 78 sind alle in einer Reihe angeordnet, die auf gleichbleibender Höhe in Umfangsrichtung verläuft. Genauer gesagt haben die Mittelpunkte der Ausströmöffnungen 78 alle den gleichen axialen Abstand vom sich radial erstreckenden Generatorflansch 18.

In der Reihe sind mehr als zwölf, vorzugsweise mehr als vierzehn Ausströmöffnungen 78 vorgesehen. Beim dargestellten Ausführungsbeispiel ist es eine ungerade Anzahl: genau dreiundzwanzig Ausströmöffnungen 78 sind in der Reihe angeordnet. Allgemein ist das Verhältnis des Außenumfangs des Diffusors 10 in Millimetern zu der Anzahl n der Ausströmöffnungen in der Reihe kleiner als 16,5, vorzugsweise kleiner als 14,1, weiter vorzugsweise kleiner als 9,85. Das Verhältnis liegt weiter vorzugsweise zwischen 7,57 und 9,85, weiter vorzugsweise zwischen 8,20 und 8,96. Beim dargestellten Ausführungsbeispiel beträgt dieses Verhältnis etwa 8,56.

Wie in Figur 4 angedeutet ist, sind die Ausströmöffnungen 78 auf der Innenseite des Diffusors 10 durch eine Verdämmung in Form eines umlaufenden Verdämmbandes 84 abgedeckt. Die Dimensionen des Verdämmbandes 84 sind so gewählt, dass es in den Ringspalt 48 zwischen der Umfangswand 16 des Diffusors 10 und dem umlaufenden Filter 46 passt (siehe Figuren 1 und 2).

Die Reihe der Ausströmöffnungen 78 läuft nicht vollständig um. Im Uhrzeigersinn betrachtet markiert die mit 78a bezeichnete Ausströmöffnung den Anfang und die mit 78b bezeichnete Ausströmöffnung das Ende der Reihe. Innerhalb der Reihe sind die Abstände zwischen benachbarten Ausströmöffnungen 78 (bezogen auf deren Mittelpunkte) gleich. Der Abstand zwischen der ersten Ausströmöffnung 78a und der letzten Ausströmöffnung 78b ist dagegen doppelt so groß. Da die Anzahl n der Ausströmöffnungen 78 in der Reihe ungerade ist, entsteht somit eine Anordnung der Ausströmöffnungen 78, bei der - bezogen auf die Mittelachse A - jeder Ausströmöffnung 78 eine andere Ausströmöffnung gegenüberliegt, mit einer Ausnahme: Der mit 78c bezeichneten Ausströmöffnung liegt der Bereich zwischen der ersten Ausströmöffnung 78a und der letzten Ausströmöffnung 78b und damit keine Ausströmöffnung gegenüber. In diesem Bereich der Diffusorinnenseite ist ein Stoß des Verdämmbandes 84 angeordnet. Eine Ausströmöffnung würde hier die Dichtheit zum Außenbereich des Gasgenerators hin beeinträchtigen.

Allgemein beträgt der Winkelabstand zwischen benachbarten Ausströmöffnungen 78 bei einer solchen Konstellation (unabhängig davon, ob die Anzahl n der Ausströmöffnungen gerade oder ungerade ist) 360° / (n + 1).

Die vorzugsweise kreisförmigen Ausströmöffnungen 78 haben wenigstens zwei unterschiedliche Strömungsquerschnitte; beim dargestellten Ausführungsbeispiel sind es insgesamt drei unterschiedliche Strömungsquerschnitte. Die Ausströmöffnungen 78 sind deshalb in Figur 3 mit dem Zusatz (1), (2) oder (3) versehen, um den zugehörigen Strömungsquerschnitt zu kennzeichnen. Die unterschiedlichen Strömungsquerschnitte (1), (2) und (3) sind durch unterschiedliche Durchmesser der Ausströmöffnungen 78 bestimmt.

Die Strömungsquerschnitte (1), (2) und (3) der Ausströmöffnungen 78 sind so gewählt, dass gegenüberliegende Ausströmöffnungen 78 den gleichen Strömungsquerschnitt haben. Dagegen weisen benachbarte Ausströmöffnungen 78 innerhalb der Reihe unterschiedliche Strömungsquerschnitte auf. Beim dargestellten Ausführungsbeispiel wiederholt sich in der Reihe folgende Abfolge der Strömungsquerschnitte: kleiner Strömungsquerschnitt (1) → mittlerer Strömungsquerschnitt (2) → kleiner Strömungsquerschnitt (1) → großer Strömungsquerschnitt (3).

Das Verhältnis des Außenumfangs des Diffusors 10 (ohne Generatorflansch 18) in mm zur Anzahl der Ausströmöffnungen 78 mit kleinem Strömungsquerschnitt (1) ist kleiner als 19,7 und liegt vorzugsweise zwischen 15,1 und 19,7. Beim dargestellten Ausführungsbeispiel beträgt dieses Verhältnis etwa 17,9.

Das Verhältnis des Außenumfangs des Diffusors 10 in mm zur Anzahl der Ausströmöffnungen 78 mit mittlerem Strömungsquerschnitt (2) sowie zur Anzahl der Ausströmöffnungen 78 mit großem Strömungsquerschnitt (3) ist kleiner als 39,4 und liegt vorzugsweise zwischen 28,2 und 39,4. Beim dargestellten Ausführungsbeispiel beträgt dieses Verhältnis etwa 32,8.

Das Verhältnis des Gesamtströmungsquerschnitts aller Ausströmöffnungen 78 in der Reihe in mm² zum Außenumfang des Diffusors 10 in mm ist größer als 110 und liegt vorzugsweise zwischen 110 und 139. Beim dargestellten Ausführungsbeispiel beträgt dieses Verhältnis etwa 124.

Aus der in Figur 5 dargestellten Draufsicht auf den Diffusor 10 des Gasgenerators geht hervor, dass der sich von der Umfangswand 16 des Diffusors 10 radial nach außen erstreckende Generatorflansch 18 eine im Wesentlichen rechteckige Form hat. Die Mittelachse A des rotationssymmetrischen Außengehäuses mit kreisförmigem Querschnitt verläuft durch den Mittelpunkt M des Generatorflanschs 18.

Das Verhältnis der Länge I zur Breite b des Rechtecks, welches der Generatorflansch 18 beschreibt, liegt zwischen 1,12 und 1,31, vorzugsweise zwischen 1,16 und 1,27. Beim dargestellten Ausführungsbeispiel beträgt dieses Verhältnis etwa 1,21.

Das Verhältnis der Länge I des Rechtecks zum Außendurchmesser a des Außengehäuses (ohne Generatorflansch 18) liegt zwischen 1,24 und 1,48, vorzugsweise zwischen 1,30 und 1,42. Beim dargestellten Ausführungsbeispiel beträgt dieses Verhältnis etwa 1,36.

Das Verhältnis der Breite b des Rechtecks zum Außendurchmesser a des Außengehäuses liegt zwischen 1,01 und 1,23, vorzugsweise zwischen 1,06 und 1,17. Beim dargestellten Ausführungsbeispiel beträgt dieses Verhältnis etwa 1,12.

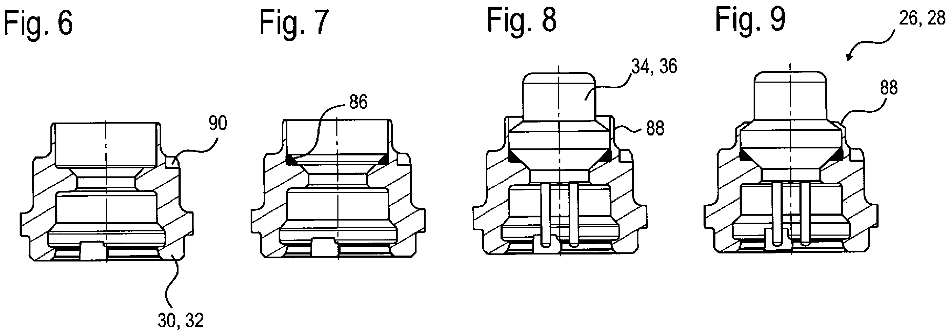

In den Figuren 6 bis 9 sind verschiedene Schritte des Zusammenbaus einer der Anzündereinheiten 26, 28 gezeigt, bevor diese als vormontierte Einheit in eine der Bodenöffnungen 24 des Verschlusskörpers 12 eingesetzt wird. In den in Figur 6 gezeigten Anzünderträger 30 bzw. 32 wird zunächst ein Dichtring 86 in eine Anzünderaufnahme eingelegt (siehe Figur 7), bevor der Anzünder 34 bzw. 36 in die Anzünderaufnahme des Anzünderträgers 30 bzw. 32 eingesetzt wird (siehe Figur 8). Danach wird der abstehende umlaufende Rand 88 der Anzünderaufnahme so umgebördelt, dass der Anzünder 34 bzw. 36 im Anzünderträger 30 bzw. 32 sicher gehalten ist (siehe Figur 9).

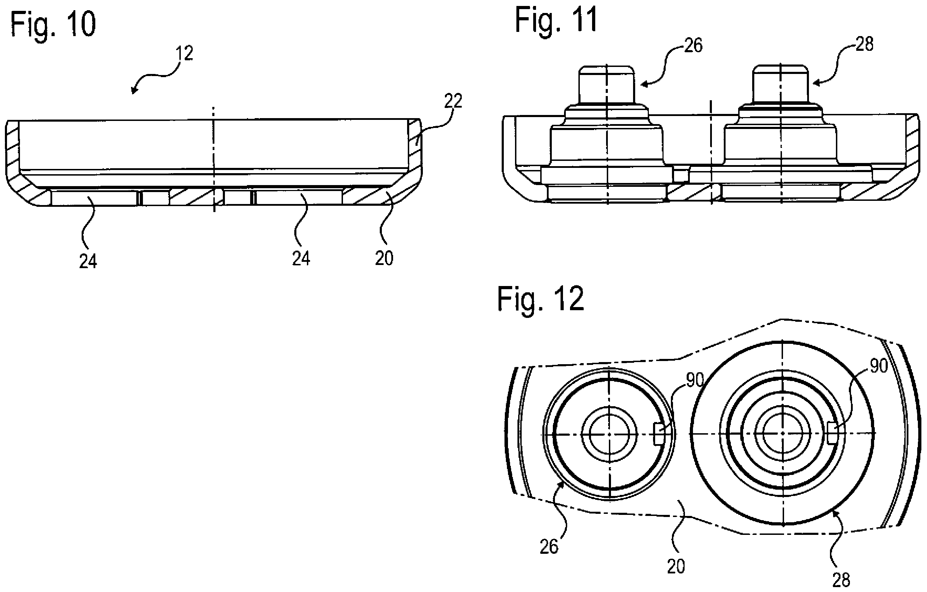

Der Anzünderträger 30 bzw. 32 weist an einer bestimmten Stelle eine Einfräsung als Markierung 90 auf. Die Markierung 90 gibt eine Orientierung der Anzündereinheit 26 bzw. 28 vor. Ein beim Zusammenbau des Gasgenerators verwendetes Montagewerkzeug ist so ausgebildet, dass es die Anzündereinheit 26 bzw. 28 nur in einer vorbestimmten Orientierung aufnehmen kann. Beim Einbau der Anzündereinheit 26 bzw. 28 wird diese mithilfe des entsprechend eingerichteten Werkzeugs in der gewünschten Orientierung eingebaut (siehe Figuren 10 bis 12).

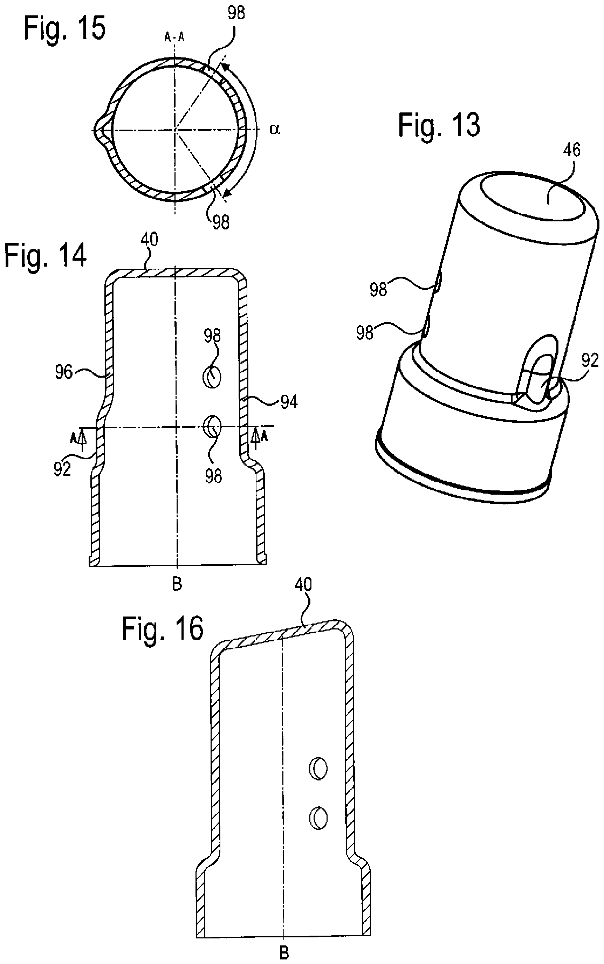

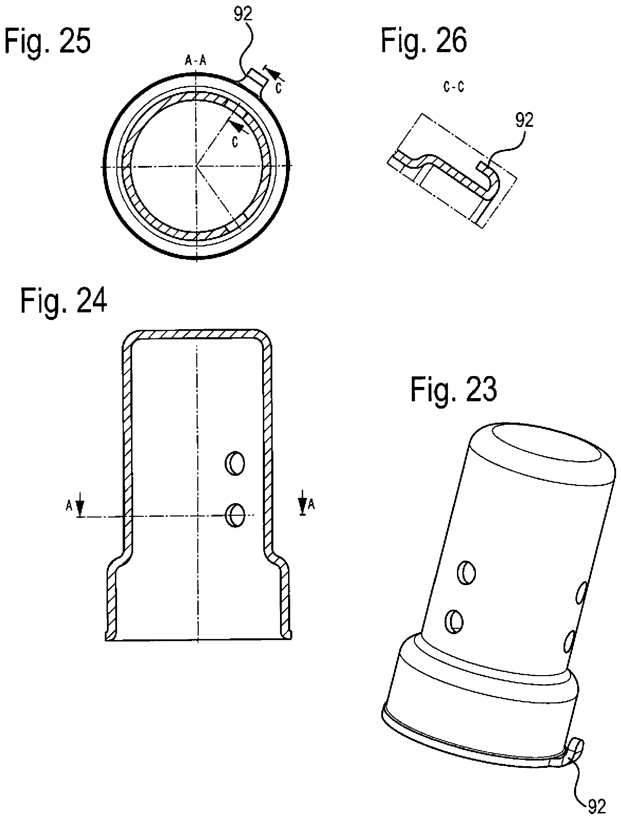

In den Figuren 13 bis 26 sind verschiedene Ausführungsvarianten der Anzünderhülse 38 gezeigt, die in einer vorbestimmten Orientierung auf dem ersten Anzünderträger 30 angeordnet ist. Hierfür weist die Anzünderhülse 38 eine von ihrer Mittelachse B entfernte oder sich unsymmetrisch von der Mittelachse B erstreckende Markierung 92 auf. Mithilfe der Markierung 92 ist es möglich, die korrekte Orientierung der Anzünderhülse 38 beim Aufsetzen auf die erste Anzündereinheit 26 sicherzustellen.

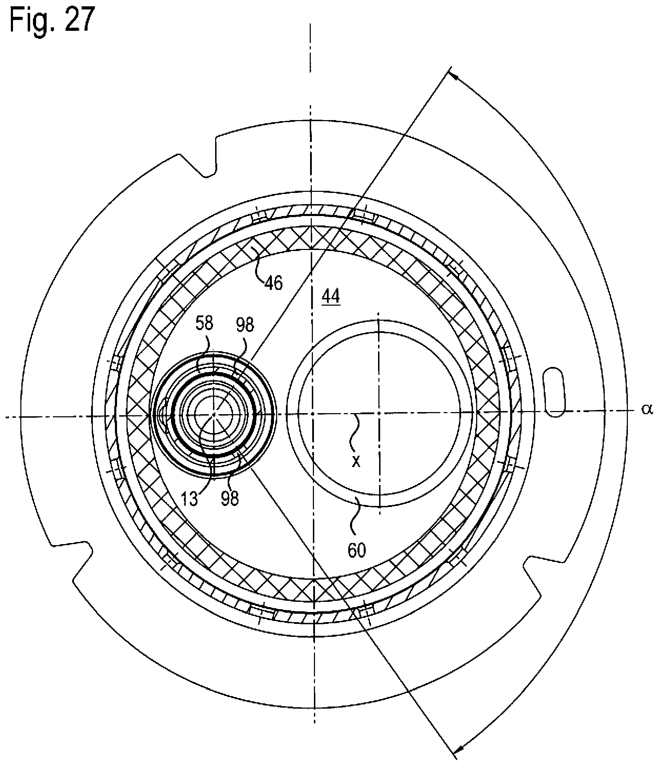

Bei der in den Figuren 13 bis 15 gezeigten Ausführungsvariante der Anzünderhülse 38 ist die Markierung 92 als Nase ausgebildet, die sich von einem verjüngten Abschnitt 94 der Seitenwand 96 der Anzünderhülse 38 radial nach außen erstreckt. Ähnlich wie bei der mit der Markierung 90 versehenen Anzündereinheit 26 bzw. 28 hat ein beim Zusammenbau des Gasgenerators verwendetes Montagewerkzeug eine der Nase entsprechende Ausnehmung, sodass die Anzünderhülse 38 nur in einer vorbestimmten Orientierung im Montagewerkzeug aufgenommen werden kann. Das Montagewerkzeug ist so eingerichtet, dass die Anzünderhülse 38 beim Einbau dann in der in Figur 27 gezeigten Orientierung auf den ersten Anzünderträger 30 aufgesteckt wird.

In Figur 16 ist eine andere Ausführungsvariante der Anzünderhülse 38 gezeigt. Der Boden 40 der Anzünderhülse 38 ist hier gegenüber einer zur Mittelachse B der Anzünderhülse 38 senkrechten Ebene in einem bestimmten Winkel geneigt. Die Schräge des Anzünderhülsenbodens 40 ist so auf die axiale Wölbung des Deckenabschnitts 14 des Diffusors 10 abgestimmt, dass die Anzünderhülse 38 nur in der vorbestimmten Orientierung unter den Deckenabschnitt 14 des Diffusors 10 passt.

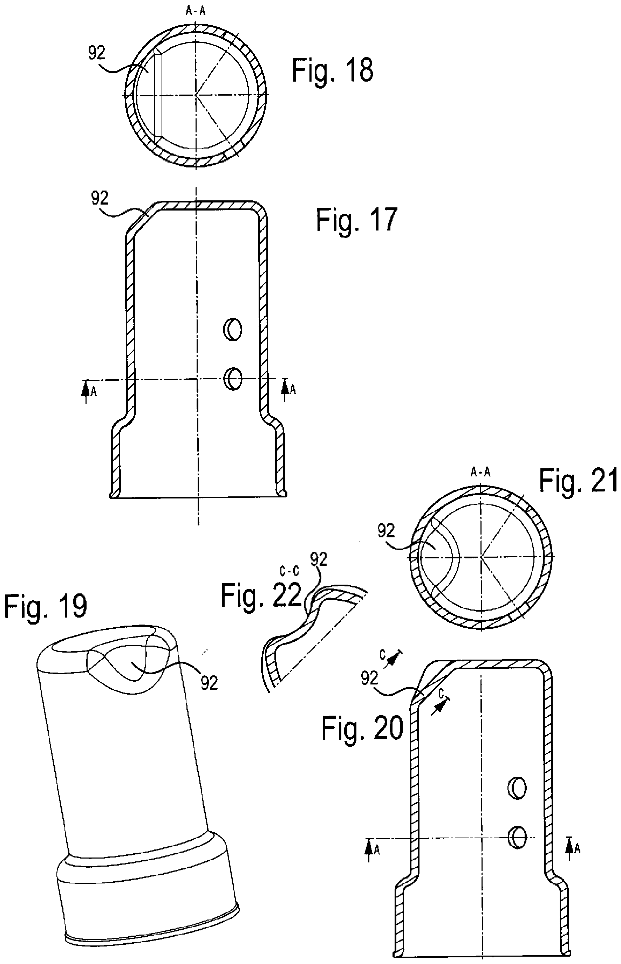

Weitere alternative Ausführungsvarianten der Anzünderhülse 38 mit besonderen Markierungen 92 sind in den Figuren 17 und 18, 19 bis 22 sowie 23 bis 26 gezeigt.

Bei Aktivierung der ersten Stufe des Gasgenerators wird die Anzünderhülse 38 durch den beim Abbrand der Verstärkerladung entstehenden Druck nach oben, d.h. in Richtung des Deckenabschnitts 14 des Diffusors 10 bewegt. Die maximale Bewegung der Anzünderhülse 38 ist durch den Deckenabschnitt 14 des Diffusors 10 begrenzt, der seinerseits eine Verformung erfährt (Ausbauchen). Im Gegensatz zur Brennkammerhülse 60 (wie später noch erläutert wird) löst sich die Anzünderhülse 38 nicht vom Aufnahmeabschnitt des ersten Anzünderträgers 30, d. h. es entsteht durch das Anheben, der Anzünderhülse 38 keine zusätzliche Austrittsöffnung, die aus der Anzünderkammer 42 herausführt.

Allen Ausführungsvarianten der Anzünderhülse 38 ist gemeinsam, dass sie - bezogen auf die Mittelachse B der Anzünderhülse 38 - in Umfangsrichtung ungleichmäßig verteilte Überströmöffnungen 98 aufweisen. Genauer gesagt sind die Überströmöffnungen 98 auf einen bestimmten Bereich der Seitenwand 96 der Anzünderhülse 38 beschränkt. Wenn die Anzünderhülse 38 in der vorbestimmten Orientierung auf den ersten Anzünderträger 30 aufgesteckt ist, sind die Überströmöffnungen 98 nicht direkt auf den Filter 46 gerichtet. Die Mittelachsen der äußeren Überströmöffnungen 98 in dem bestimmten Bereich der Seitenwand 96 definieren nämlich in Umfangsrichtung einen begrenzten Winkelbereich α für den Austritt des Heißgases (Anzündstrahlen) beim Abbrennen der Verstärkerladung in der Anzünderkammer 42 (siehe Figur 15).

Wie in Figur 27 angedeutet ist, erstreckt sich der Winkelbereich α zu beiden Seiten einer Verbindungslinie zwischen der Mittelachse B der Anzünderhülse 38 und dem von der Mittelachse B maximal entfernten Abschnitt des Filters 46. Insbesondere schließt der Winkelbereich α diejenigen Bereiche der mit Treibstoff gefüllten ersten Brennkammer 44 ein, in denen der nicht durch Bauteile des Gasgenerators blockierte Abstand zum Filter 46 maximal ist. Der Winkelbereich α ist stumpf und liegt zwischen 90° und 135°, vorzugsweise zwischen 100° und 120°. Beim dargestellten Ausführungsbeispiel gemäß Figur 27 beträgt der Winkelbereich α etwa 110°.

Wie ebenfalls aus Figur 27 ersichtlich ist, umschließt der Winkelbereich α auch die Brennkammerhülse 60. Die Überströmöffnungen 98 sind aber so angeordnet, dass die austretenden Anzündstrahlen nicht direkt auf die Brennkammerhülse 60 gerichtet sind, sondern vornehmlich auf Bereiche, in denen auf einer möglichst großen Länge möglichst viel Treibstoff erfasst wird.

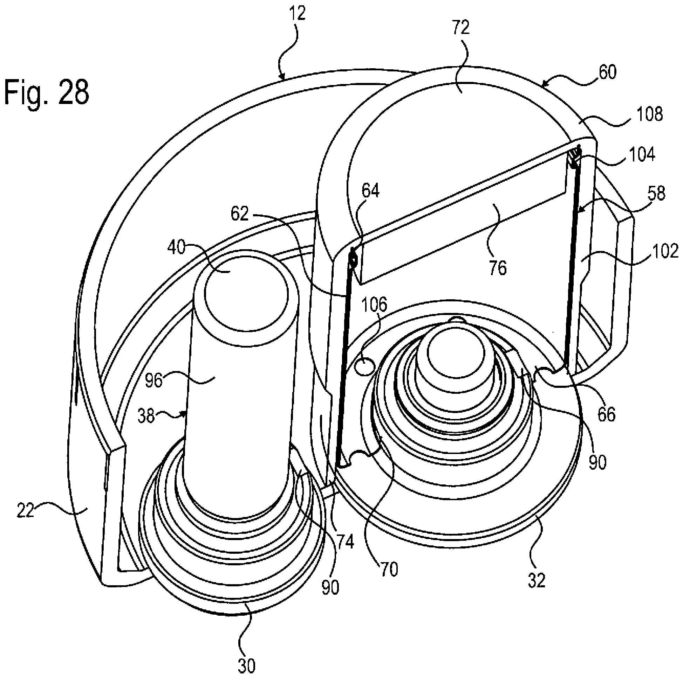

Aus Figur 28 ist der besondere Aufbau der zweiten Brennkammer 56 ersichtlich. Der Boden 66 des Treibstoffkanisters 58 liegt auf einer im Wesentlichen horizontalen Fläche des zweiten Anzünderträgers 32 auf, und der umgebogene Randabschnitt 70 des Treibstoffkanisterbodens 66 stützt sich an einer umlaufenden Außenfläche des zweiten Anzünderträgers 32 ab. Der Treibstoffkanister 58 steht dadurch stabil und kann bequem mit Treibstoff befüllt werden.

Nach dem Befüllen wird die Brennkammerhülse 60 mit dem zweiten Füllkörper 76 in entgegengesetzter Orientierung (im Vergleich zum Treibstoffkanister 58) auf den Treibstoffkanister 58 aufgeschoben. Gemäß dem dargestellten Ausführungsbeispiel wird die Brennkammerhülse 60, die eine geringfügig größere axiale Höhe als der Treibstoffkanister 58 aufweist, so weit aufgeschoben, bis der freie Rand 74 der offenen Seite der Brennkammerhülse 60 vom unteren Aufnahmeabschnitt des zweiten Anzünderträgers 32 gehalten wird und die Treibstoffkanisteröffnung 64 (hier: die offene Seite) vollständig durch den Brennkammerhülsenboden 72 abgedeckt ist. Die im Wesentlichen zylindrischen Seitenwände 62, 102 des Treibstoffkanisters 58 und der Brennkammerhülse 60 liegen einander dann unmittelbar gegenüber, genauer gesagt überdeckt die innere Mantelfläche der Brennkammerhülsenseitenwand 102 die äußere Mantelfläche der Treibstoffkanisterseitenwand 62 im Wesentlichen über die gesamte axiale Länge der beiden Hülsen 58, 60.

In der Nähe der Treibstoffkanisteröffnung 64, etwa auf Höhe des in den Treibstoffkanister 58 ragenden zweiten Füllkörpers 76, ist in der Seitenwand 62 des Treibstoffkanisters 58 eine vorzugsweise vollständig umlaufende Sicke 104 eingeprägt. Die Sicke 104 dient zur Versteifung des Treibstoffkanisters 58, insbesondere im oberen Bereich nahe der Treibstoffkanisteröffnung 64.

Im Treibstoffkanisterboden 66 sind mehrere Treibstoffkanisterbodenlöcher 106 gebildet. Die Seitenwand 62 des Treibstoffkanisters 58 hingegen weist keine Öffnungen oder Löcher auf. Die auf den Treibstoffkanister 58 aufgeschobene Brennkammerhülse 60 ist, abgesehen von ihrer offenen Seite, vollständig lochfrei.

Vor der Aktivierung der zweiten Stufe des Gasgenerators ist die zweite Brennkammer 56 vollständig geschlossen. Im Falle einer Aktivierung der zweiten Stufe brennt der Treibstoff in der zweiten Brennkammer 56 ab, und das dabei entstehende Abbrandgas erzeugt in der zweiten Brennkammer 56 einen Überdruck. Durch den Überdruck wird die Brennkammerhülse 60 in Richtung des Deckenabschnitts 14 des Diffusors 10 gedrückt.

Ein von der Mittelachse A des Gasgenerators entfernter Randbereich 108 des Brennkammerhülsenbodens 72 berührt entweder bereits im nicht aktivierten Zustand des Gasgenerators oder nach einer geringfügigen Verschiebung der Brennkammerhülse 60 nach oben den Deckenabschnitt 14 des Diffusors 10. In jedem Fall begrenzt der Deckenabschnitt 14, der infolge der Gasentwicklung selbst ausbaucht, die axiale Bewegung der Brennkammerhülse 60.

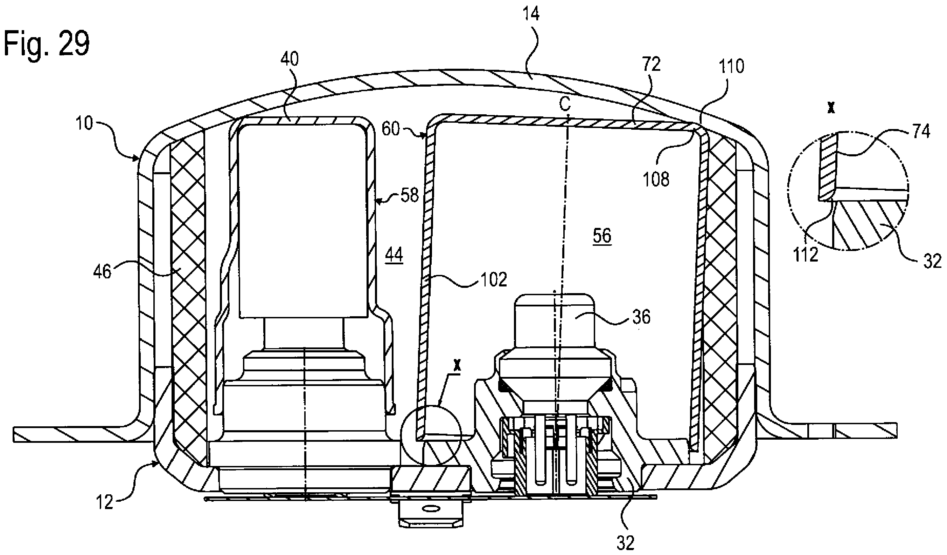

Da sich die Brennkammerhülse 60 am Randbereich des Deckenabschnitts 14 abstützt, kippt die Brennkammerhülse 60 aufgrund des weiterhin vorhandenen Drucks in der zweiten Brennkammer 56 um die Kontaktstelle 110, wie in Figur 29 gezeigt ist. Es ist auch möglich, dass sich die Brennkammerhülse 60 zusätzlich oder alternativ zum Kippen ungleichmäßig verformt. In jedem Fall hebt sich ein vom äußeren Rand des Gasgenerators abgewandter Abschnitt der Seitenwand 102 der Brennkammerhülse 60 vom zweiten Anzünderträger 32 ab und gibt einen Austrittspalt 112 frei, der insbesondere in der Detailvergrößerung X der Figur 29 zu erkennen ist.

Das beim Abbrand des Treibstoffs in der zweiten Brennkammer 56 entstehende Gas gelangt durch die Löcher 106 im Treibstoffkanisterboden 66 zum Austrittspalt 112 und durch diesen aus der zweiten Brennkammer 56 in die erste Brennkammer 44 hinein. Gemäß einer anderen Ausführungsvariante des Treibstoffkanisters 58 weist dieser anfangs keine Treibstoffkanisterbodenlöcher 106 auf; die Löcher werden erst durch den beim Abbrand des Treibstoffs entstehenden Druck und ein dadurch bedingtes Aufreißen des Treibstoffkanisterbodens 66 gebildet.

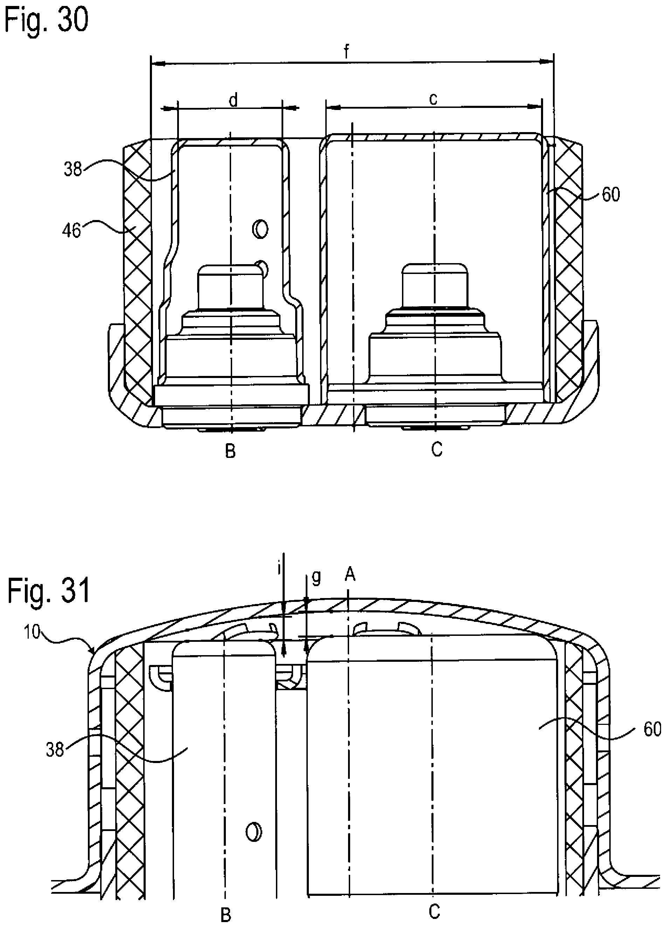

Der Abstand zwischen der Mittelachse B der Anzünderhülse 38 und der Mittelachse C der Brennkammerhülse 60, die in Figur 30 im eingebauten Zustand dargestellt sind, liegt zwischen 22,5 und 27,5 mm, vorzugsweise zwischen 23,5 und 26,5 mm. Beim dargestellten Ausführungsbeispiel beträgt dieser Abstand etwa 25 mm.

Das Verhältnis des minimalen Innendurchmessers c der Brennkammerhülse 60 zum minimalen Innendurchmesser d der Anzünderhülse 38 liegt zwischen 1,64 und 2,63, vorzugsweise zwischen 1,83 und 2,32. Beim dargestellten Ausführungsbeispiel beträgt dieses Verhältnis etwa 2,06.

Die erste Brennkammer 44 des Gasgenerators ist, wie bereits erwähnt, radial zumindest teilweise durch den umlaufenden Filter 46 begrenzt. Das Verhältnis des Innendurchmessers f des Filters 46 zum minimalen Innendurchmesser d der Anzünderhülse 38 liegt zwischen 3,19 und 4,76, vorzugsweise zwischen 3,50 und 4,27. Beim dargestellten Ausführungsbeispiel beträgt dieses Verhältnis etwa 3,85.

Das Verhältnis des Innendurchmessers f des Filters 46 zum minimalen Innendurchmesser c der Brennkammerhülse 60 liegt zwischen 1,66 und 2,11, vorzugsweise zwischen 1,76 und 1,99. Beim dargestellten Ausführungsbeispiel beträgt dieses Verhältnis etwa 1,87.

Das Verhältnis des Außendurchmessers a des Gasgenerators, genauer gesagt des Außengehäuses (ohne Berücksichtigung des Generatorflanschs 18), zum minimalen Innendurchmesser d der Anzünderhülse 38 liegt zwischen 4,09 und 5,98, vorzugsweise zwischen 4,46 und 5,39. Beim dargestellten Ausführungsbeispiel beträgt dieses Verhältnis vorzugsweise etwa 4,89.

Das Verhältnis des Außendurchmessers a des Gasgenerators zum minimalen Innendurchmesser c der Brennkammerhülse 60 liegt zwischen 2,13 und 2,66, vorzugsweise zwischen 2,24 und 2,5. Beim dargestellten Ausführungsbeispiel beträgt dieses Verhältnis etwa 2,38.

Wie ebenfalls aus Figur 30 hervorgeht, ist die axiale Höhe des Kontaktbereichs zwischen der Anzünderhülse 38 und dem ersten Anzünderträger 30 größer als die axiale Höhe des Kontaktbereichs zwischen der Brennkammerhülse und dem zweiten Anzünderträger 32.

In Figur 31 ist die Anordnung der Anzünderhülse 38 und der Brennkammerhülse 60 relativ zum Deckenabschnitt 14 des Diffusors 10 gezeigt. Bezogen auf die Mittelachse A des Diffusors 10 variiert sowohl der axiale Abstand g zwischen der Brennkammerhülse 60 und dem Deckenabschnitt 14 als auch der axiale Abstand i zwischen der Anzünderhülse 38 und dem Deckenabschnitt 38. Im dargestellten Ausführungsbeispiel berührt die Brennkammerhülse 60 den Deckenabschnitt 14 des Diffusors 10 bereits im nicht aktivierten Zustand des Gasgenerators an der Kontaktstelle 110 im äußeren Randbereich des Gasgenerators.

Der axiale Abstand g zwischen der Brennkammerhülse 60 und dem Deckenabschnitt 14 des Diffusors 10 ist an der Mittelachse A des Diffusors 10 am größten und verringert sich mit zunehmendem radialem Abstand von der Mittelachse A stetig. Der maximale Abstand g liegt zwischen 2,3 und 3,7 mm, vorzugsweise zwischen 2,7 und 3,3 mm. Beim dargestellten Ausführungsbeispiel beträgt dieser maximale Abstand g etwa 3,0 mm.

Auch der axiale Abstand i der neben der Mittelachse A des Diffusors 10 angeordneten Anzünderhülse 38 ist nicht konstant, sondern verringert sich mit zunehmendem radialem Abstand von der Mittelachse A des Diffusors 10 stetig. Der maximale Abstand i zwischen der Anzünderhülse 38 und dem Deckenabschnitt 14 des Diffusors 10 liegt zwischen 2,1 und 3,5 mm, vorzugsweise zwischen 2,5 und 3,1 mm. Beim dargestellten Ausführungsbeispiel beträgt dieser maximale Abstand i etwa 2,8 mm.

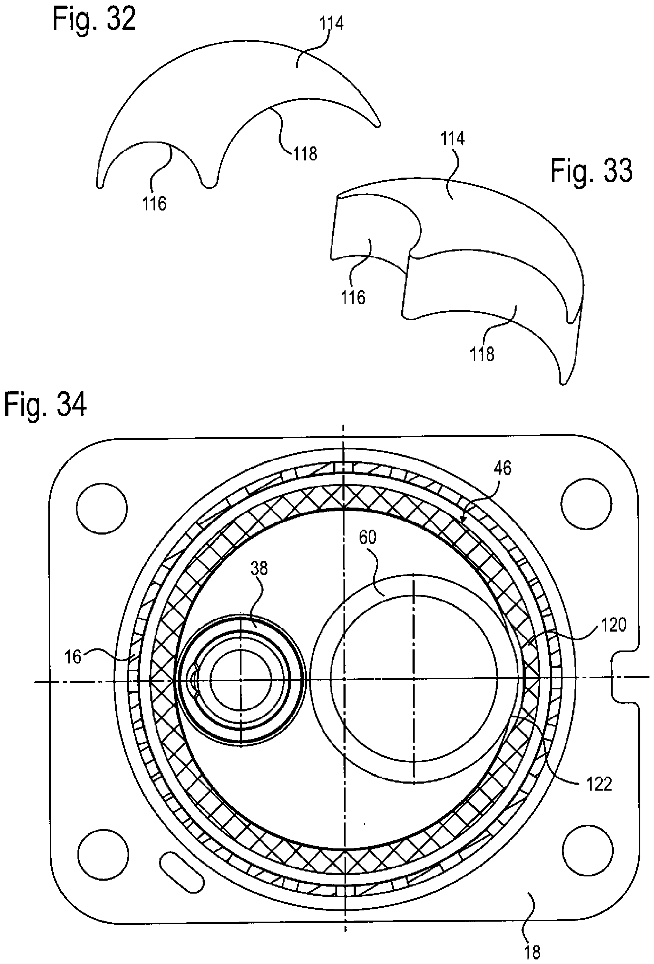

In den Figuren 32 und 33 ist jeweils ein Teil 114 des zweiteilig ausgeführten ersten Füllkörpers 82 der zweiten Ausführungsvariante gezeigt, der in der ersten Brennkammer 44 zwischen dem Treibstoff und dem Deckenabschnitt 14 des Diffusors 10 angeordnet ist und sowohl bei der hohen ersten Bauform (siehe Figur 1) als auch bei der flachen zweiten Bauform (siehe Figur 2) eingesetzt werden kann. Der aus Silikon bestehende erste Füllkörper 82 kann aber auch einteilig ausgeführt sein. In der zweiteiligen Form des ersten Füllkörpers 82 haben die beiden Teile 114 vorzugsweise die in den Figuren 32 und 33 gezeigte Doppelhalbmondform.

Im eingesetzten Zustand weist der erste Füllkörper 82 zwei Aussparungen 116, 118 auf, in die die Anzünderhülse 38 und die Brennkammerhülse 60 hineinragen. Die kleinere erste Aussparung 116 ist kreisförmig und auf den oberen Außendurchmesser der Anzünderhülse 38 abgestimmt. Die größere zweite Aussparung 118 ist ebenfalls kreisförmig und auf den oberen Außendurchmesser der Brennkammerhülse 60 abgestimmt.

Das Verhältnis des Durchmessers der größeren zweiten Aussparung 118 zum Durchmesser der kleineren ersten Aussparung 116 liegt zwischen 1,52 und 2,25, vorzugsweise zwischen 1,67 und 2,03. Beim dargestellten Ausführungsbeispiel beträgt dieses Verhältnis etwa 1,84.

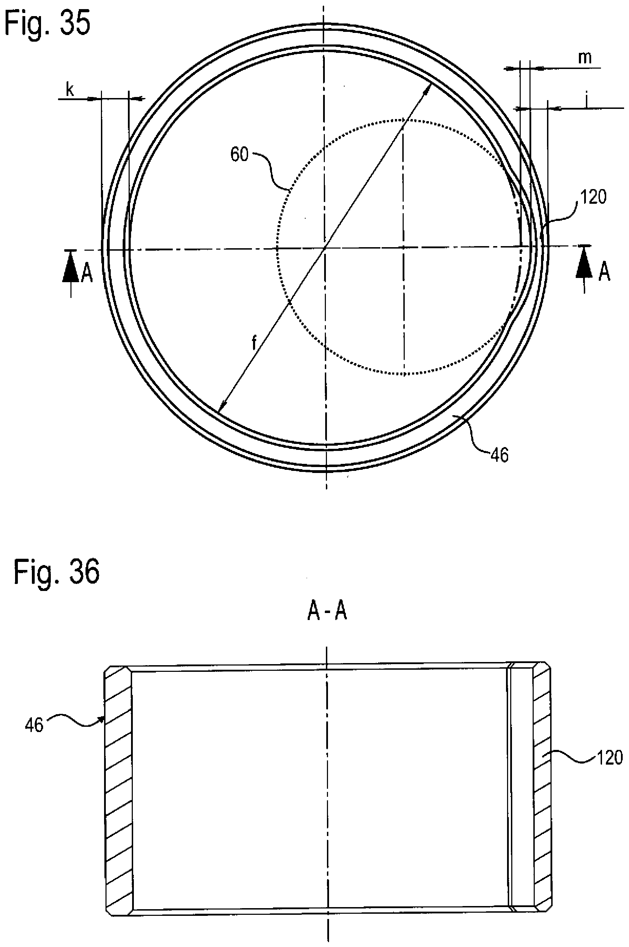

Figur 34 ist ein Schnitt durch den Gasgenerator nach der ersten Bauform (siehe Figur 1), der den Filter 46 in einem oberen Bereich des Gasgenerators zeigt. Der Filter 46, der in den Figuren 35 und 36 separat dargestellt ist, weist einen kritischen Filterabschnitt 120 auf, der der Brennkammerhülse 60 näher als die restlichen Bereiche des Filters 46 kommt.

Dieser kritische Filterabschnitt 120 weist im Vergleich zu den angrenzenden Bereichen des Filters 46 eine verringerte Dicke auf. Dadurch ist zwischen der Brennkammerhülse 60 und dem kritischen Filterabschnitt 120 ein Spalt 122 gebildet. Der kritische Filterabschnitt 120 ist in radialer Richtung komprimiert, d. h. das Filtermaterial ist im kritischen Filterabschnitt 120 höher verdichtet als in den angrenzenden Bereichen.

Die Brennkammerhülse 60 weist dagegen in dem Bereich, der dem kritischen Filterabschnitt 120 gegenüberliegt, eine erhöhte Materialdicke auf (siehe auch Figuren 1 und 5). Im dargestellten Ausführungsbeispiel ist der obere Teil der Brennkammerhülse 60 vollständig umlaufend verdickt.

Das Verhältnis der minimalen radialen Dicke j des kritischen Filterabschnitts 120 zur Dicke k der angrenzenden Bereiche des Filters 46 liegt zwischen 0,43 und 0,93, vorzugsweise zwischen 0,53 und 0,78. Beim dargestellten Ausführungsbeispiel beträgt dieses Verhältnis etwa 0,65.

Das Verhältnis der minimalen radialen Dicke j des kritischen Filterabschnitts 120 zur maximalen Breite m des Spalts 122 zwischen der Brennkammerhülse 60 und dem kritischen Filterabschnitt 120 liegt zwischen 1,17 und 2,85, vorzugsweise zwischen 1,50 und 2,23. Beim dargestellten Ausführungsbeispiel beträgt dieses Verhältnis etwa 1,83.

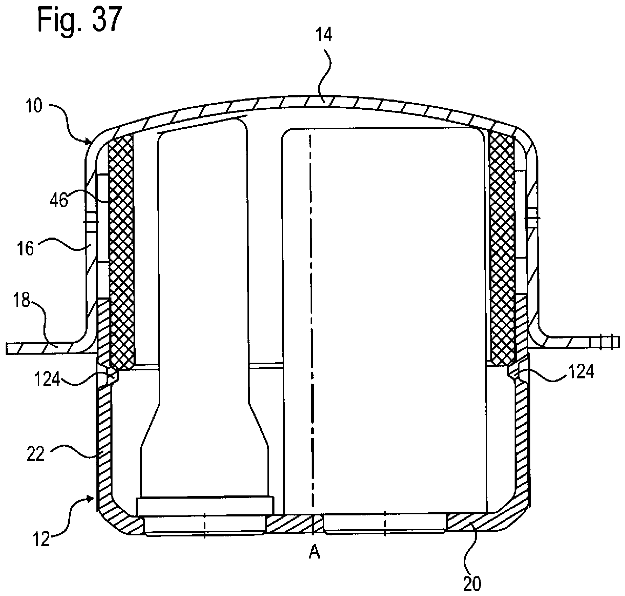

Wie aus den Figuren 1 und 2 und auch aus Figur 37 ersichtlich ist, erstreckt sich der Filter 46 allgemein in axialer Richtung über die in axialer Richtung verlaufende Umfangswand 16 des Diffusors 10 hinaus in den Bereich des Verschlusskörpers.

Bei der in Figur 37 gezeigten Ausführungsvariante der hohen ersten Bauform des Gasgenerators ist kein separates Stützelement 50 für den Filter 46 vorgesehen. Vielmehr weist der hochgezogene Rand 22 des Verschlusskörpers 12 wenigstens einen Stützabschnitt 124 auf, der eine axiale Halterung für den Filter 46 bildet. Der Stützabschnitt 124 kann durch eine vollständig umlaufende eingeprägte Sicke oder durch mehrere in Umfangsrichtung voneinander beabstandete Sicken gebildet sein. Der Filter 46 stützt sich nur mit einem radial äußeren Bereich auf dem bzw. den Stützabschnitten 124 ab.

### Bezugszeichenliste

- 10: Diffusor
- 12: Verschlusskörper
- 14: Deckenabschnitt
- 16: Umfangswand
- 18: Generatorflansch
- 20: Boden
- 22: Rand
- 24: Bodenöffnungen
- 26: erste Anzündereinheit
- 28: zweite Anzündereinheit
- 30: erster Anzünderträger
- 32: zweiter Anzünderträger
- 34: erster Anzünder
- 36: zweiter Anzünder
- 38: Anzünderhülse
- 40: Anzünderhülsenboden
- 42: Anzünderkammer
- 44: erste Brennkammer
- 46: Filter
- 48: Ringspalt
- 50: Stützelement
- 52: erster Füllkörper (erste Ausführungsvariante)
- 54: fingerförmige Abschnitte
- 56: zweite Brennkammer
- 58: Treibstoffkanister
- 60: Brennkammerhülse
- 62: Treibstoffkanisterseitenwand
- 64: Treibstoffkanisteröffnung
- 66: Treibstoffkanisterboden
- 68: Treibstoffkanisterbodenöffnung
- 70: Randabschnitt
- 72: Brennkammerhülsenboden
- 74: freier Brennkammerhülsenrand
- 76: zweiter Füllkörper
- 78: Ausströmöffnungen
- 78a: erste Ausströmöffnung (Anfang der Reihe)
- 78b: letzte Ausströmöffnung (Ende der Reihe)
- 78c: Ausströmöffnung ohne gegenüberliegende Ausströmöffnung
- 78(1): Ausströmöffnung mit kleinem Strömungsquerschnitt
- 78(2): Ausströmöffnung mit mittlerem Strömungsquerschnitt
- 78(3): Ausströmöffnung mit großem Strömungsquerschnitt
- 80: Übergangsbereich
- 82: erster Füllkörper (zweite Ausführungsvariante)
- 84: Verdämmband
- 86: Dichtring
- 88: Anzünderträgerrand
- 90: Markierung des Anzünderträgers
- 92: Markierung der Anzünderhülse
- 94: verjüngter Abschnitt
- 96: Anzünderhülsenseitenwand
- 98: Überströmöffnungen
- 102: Brennkammerhülsenseitenwand
- 104: Sicke
- 106: Treibstoffkanisterbodenlöcher
- 108: Brennkammerhülsenbodenrandbereich
- 110: Kontaktstelle
- 112: Austrittspalt
- 114: Füllkörperteil
- 116: erste Aussparung des ersten Füllkörpers
- 118: zweite Aussparung des ersten Füllkörpers
- 120: kritischer Filterabschnitt
- 122: Spalt
- 124: Stützabschnitt
- A: Mittelachse des Gasgenerators, des Diffusors u. des Verschlusskörpers
- a: Außendurchmesser des Gasgenerators (ohne Generatorflansch)
- h1: axiale Höhe des Außengehäuses (erste Bauform)
- h2: axiale Höhe des Außengehäuses (zweite Bauform)
- n: Anzahl der Ausströmöffnungen in der Reihe
- M: Mittelpunkt des Generatorflanschs
- l: Länge des rechteckigen Flanschs
- b: Breite des rechteckigen Flanschs
- B: Mittelachse der Anzünderhülse
- α: Winkelbereich
- x: Verbindungslinie
- C: Mittelachse der Brennkammerhülse und des Treibstoffkanisters
- c: minimaler Innendurchmesser der Brennkammerhülse
- d: minimaler Innendurchmesser der Anzünderhülse
- f: Innendurchmessers des Filters
- g: axialer Abstand zwischen Brennkammerhülse und Deckenabschnitt
- i: axialer Abstand zwischen Anzünderhülse und Deckenabschnitt
- j: minimale Dicke des kritischen Filterabschnitts
- k: Dicke des restlichen Filters
- m: maximale Breite des Spalts

## Patentansprüche

1. **Gasgenerator** für eine Schutzeinrichtung in einem Fahrzeug mit einem mit einem Treibstoff gefüllten Treibstoffkanister (58) mit einem Treibstoffkanisterboden (66) und einer dem Treibstoffkanisterboden (66) entgegengesetzten Treibstoffkanisteröffnung (64), die mittels eines Brennkammerbauteils (60) geschlossen ist, wobei das Brennkammerbauteil eine Brennkammerhülse (60) ist, die eine einer bestimmten Aktivierungsstufe des Gasgenerators zugeordnete Brennkammer (56) wenigstens teilweise umschließt, wobei die Brennkammerhülse (60) eine Brennkammerhülsenöffnung oder eine offene Seite und einen dazu entgegengesetzten Brennkammerhülsenboden (72) aufweist, der die Treibstoffkanisteröffnung (64) abdeckt, wobei am Brennkammerhülsenboden (72) ein zweiter Füllkörper (76) angeordnet ist,
**dadurch gekennzeichnet, dass** im Treibstoffkanisterboden (66) eine zentrale Treibstoffkanisterbodenöffnung (68) zur Aufnahme eines Trägerbauteils gebildet ist und der Treibstoffkanister (58) und die Brennkammerhülse (60) zwei offene, im Wesentlichen zylindrische Hülsen sind, die entgegengesetzt orientiert ineinandergesteckt sind, sodass sich eine innere oder äußere Mantelfläche des Treibstoffkanisters (58) und eine äußere bzw. innere Mantelfläche der Brennkammerhülse (60) im Wesentlichen über die gesamte axiale Länge der Mantelflächen überdecken, wobei die Brennkammerhülse (60) außenseitig auf den Treibstoffkanister (58) aufgeschoben ist.

2. Gasgenerator nach Anspruch 1, **dadurch gekennzeichnet, dass** die Treibstoffkanisterbodenöffnung (68) durch einen, vorzugsweise umgebogenen, inneren Randabschnitt (70) gebildet ist, der sich vom Treibstoffkanisterboden (66) in das Innere des Treibstoffkanisters (58) erstreckt.

3. Gasgenerator nach zumindest einem der voranstehenden Ansprüche 1 bis 2, **dadurch gekennzeichnet, dass** im Treibstoffkanisterboden (66) mehrere Löcher (106) gebildet sind.

4. Gasgenerator nach zumindest einem der voranstehenden Ansprüche 1 bis 3, **dadurch gekennzeichnet, dass** die Brennkammerhülse (60), abgesehen von der Brennkammerhülsenöffnung bzw. offenen Seite, lochfrei ist.

5. Gasgenerator nach zumindest einem der voranstehenden Ansprüche 1 bis 4, **dadurch gekennzeichnet, dass** die Brennkammerhülse (60) auf einen Anzünderträger (32) aufgesteckt ist.

6. Gasgenerator nach zumindest einem der voranstehenden Ansprüche 2 bis 5, **dadurch gekennzeichnet, dass** zumindest ein Teil einer sich zwischen der Treibstoffkanisteröffnung (64) und dem Treibstoffkanisterboden (66) erstreckenden Seitenwand (62) des Treibstoffkanisters (58) zumindest einem Teil einer sich zwischen der Brennkammerhülsenöffnung bzw. der offenen Seite der Brennkammerhülse (60) und dem Brennkammerhülsenboden (72) erstreckenden Seitenwand (102) der Brennkammerhülse (60) unmittelbar gegenüberliegt.

7. Gasgenerator nach zumindest einem der voranstehenden Ansprüche, **dadurch gekennzeichnet, dass** der Gasgenerator einen Diffusor (10) hat, der, vorzugsweise mit einem Verschlusskörper (12), ein im Wesentlichen rotationssymmetrisches Außengehäuse des Gasgenerators bildet, wobei der Diffusor (10) mehr als 12 Ausströmöffnungen (78) aufweist, die in einer Reihe angeordnet sind.

8. Gasgenerator nach Anspruch 7, **dadurch gekennzeichnet, dass** die Ausströmöffnungen (78) wenigstens zwei, vorzugsweise drei unterschiedliche Strömungsquerschnitte haben, wobei die unterschiedlichen Strömungsquerschnitte durch unterschiedliche Durchmesser der kreisförmigen Ausströmöffnungen (78) bestimmt sind, und vorzugsweise, bezogen auf die Mittelachse A des Diffusors (10), gegenüberliegende Ausströmöffnungen (78) den gleichen Strömungsquerschnitt haben.

9. Gasgenerator nach zumindest einem der voranstehenden Ansprüche 7 oder 8, **dadurch gekennzeichnet, dass** unmittelbar benachbarte Ausströmöffnungen (78) unterschiedliche Strömungsquerschnitte haben, wobei die Ausströmöffnungen (78) wenigstens drei unterschiedliche Strömungsquerschnitte haben und dass in der Reihe der Ausströmöffnungen (78) zumindest teilweise eine sich wiederholende Abfolge der Art erster Strömungsquerschnitt, zweiter Strömungsquerschnitt, erster Strömungsquerschnitt, dritter Strömungsquerschnitt vorgesehen ist.

10. Gasgenerator nach zumindest einem der voranstehenden Ansprüche 7 bis 9, **dadurch gekennzeichnet, dass** die Reihe der Ausströmöffnungen (78) bezüglich einer Mittelachse A des Diffusors (10) in Umfangsrichtung verläuft und einen Anfang mit einer ersten Ausströmöffnung (78a) sowie ein Ende mit einer letzten Ausströmöffnung (78b) hat, wobei der Abstand zwischen der ersten Ausströmöffnung (78a) und der letzten Ausströmöffnung (78b) größer, vorzugsweise doppelt so groß ist wie der Abstand zwischen benachbarten Ausströmöffnungen (78) in der Reihe, wobei weiterhin vorzugsweise zwischen dem Anfang und dem Ende der Reihe ein Stoß eines Verdämmbandes (84) angeordnet ist.

11. Gasgenerator nach einem der vorhergehenden Ansprüche, **dadurch gekennzeichnet,**
**dass** der Gasgenerator einen, bezogen auf eine Mittelachse A des Gasgenerators, radial abstehenden Generatorflansch (18) hat zur Befestigung des Gasgenerators an einem Träger, wobei der Generatorflansch (18) im Wesentlichen die Form eines Rechtecks hat, **dadurch gekennzeichnet, dass** das Verhältnis der Länge I zur Breite b des Rechtecks zwischen 1,12 und 1,31, vorzugsweise zwischen 1,16 und 1,27 liegt und weiter vorzugsweise etwa 1,21 beträgt, und / oder,
dass das Verhältnis der Länge I des Rechtecks zum Außendurchmesser a des Außengehäuses zwischen 1,24 und 1,48, vorzugsweise zwischen 1,30 und 1,42 liegt und weiter vorzugsweise etwa 1,36 beträgt, und / oder,
dass das Verhältnis der Breite b des Rechtecks zum Außendurchmesser a des Außengehäuses zwischen 1,01 und 1,23, vorzugsweise zwischen 1,06 und 1,17 liegt und weiter vorzugsweise etwa 1,12 beträgt.

12. Gassackmodul für ein Fahrzeug, mit einem Gassack, der ein Volumen von 40 bis 60 Liter aufweist, **gekennzeichnet durch** einen Gasgenerator nach einem der Ansprüche 1 bis 11.

13. Gassackmodul für ein Fahrzeug, mit einem Gassack, der ein Volumen von 60 bis 135 Liter aufweist, **gekennzeichnet durch** einen Gasgenerator nach einem der Ansprüche 1 bis 11.

## Claims

1. **An inflator** for a protective device in a vehicle comprising a fuel canister (58) filled with fuel having a fuel canister bottom (66) and a fuel canister opening (64) opposed to the fuel canister bottom (66) which is closed by means of a combustion chamber component (60), wherein the combustion chamber component is a combustion chamber sleeve (60) which at least partially encloses a combustion chamber (56) associated with a particular activating stage of the inflator, wherein the combustion chamber sleeve (60) includes a combustion chamber sleeve orifice or an open side and a combustion chamber sleeve bottom (72) opposed thereto which covers the fuel canister opening (64), wherein a second fill member (76) is arranged at the combustion chamber sleeve bottom (72),
**characterized in that** a central fuel canister bottom opening (68) is formed in the fuel canister bottom (66) for receiving a support component and the fuel canister (58) and the combustion chamber sleeve (60) are two open substantially cylindrical sleeves which are inserted into each other at opposed orientation so that an inner or outer shell of the fuel canister (58) and an outer or inner shell of the combustion chamber sleeve (60) substantially cover each other over the entire axial length of the shells, wherein the combustion chamber sleeve (60) being slipped onto the outside of the fuel canister (58).

2. The inflator according to claim 1, **characterized in that** the fuel canister bottom opening (68) is formed by a preferably bent inner edge portion (70) extending from the fuel canister bottom (66) into the interior of the fuel canister (58).

3. The inflator according to at least one of the preceding claims 1 to 2, **characterized in that** plural holes (106) are formed in the fuel canister bottom (66).

4. The inflator according to at least one of the preceding claims 1 to 3, **characterized in that** the combustion chamber sleeve (60) is free of holes apart from the combustion chamber sleeve orifice or the open side.

5. The inflator according to at least one of the preceding claims 1 to 4, **characterized in that** the combustion chamber sleeve (60) is attached to an igniter carrier (32).

6. The inflator according to at least one of the preceding claims 2 to 5, **characterized in that** at least part of a side wall (62) of the fuel canister (58) extending between the fuel canister opening (64) and the fuel canister bottom (66) is directly opposed to at least part of a side wall (102) of the combustion chamber sleeve (60) extending between the combustion chamber sleeve orifice or the open side of the combustion chamber sleeve (60) and the combustion chamber sleeve bottom (72).

7. The inflator according to at least one of the preceding claims, **characterized in that** the inflator comprises a diffuser (10) which forms a substantially rotation-symmetric external housing of the inflator preferably with a closing member (12), the diffuser (10) having more than 12 discharge orifices (78) arranged in a row.

8. The inflator according to claim 7, **characterized in that** the discharge orifices (78) have at least two, preferably three different flow cross-sections, wherein the different flow cross-sections are defined by the different diameters of the circular discharge orifices (78) and opposite discharge orifices (78) preferably have the same flow cross-section related to the central axis A of the diffuser (10).

9. The inflator according to at least one of the preceding claims 7 or 8, **characterized in that** the directly adjacent discharge orifices (78) have different flow cross-sections, wherein the discharge orifices (78) have at least three different flow cross-sections and that in the row of the discharge orifices (78) at least partly a recurring sequence of the following type is provided: first flow cross-section, second flow cross-section, first flow cross-section, third flow cross-section.

10. The inflator according to at least one of the preceding claims 7 to 9, **characterized in that** the row of discharge orifices (78) extends with respect to a central axis A of the diffuser (10) in the circumferential direction and has a beginning with a first discharge orifice (78a) as well as an end with a last discharge orifice (78b), wherein the distance between the first discharge orifice (78a) and the last discharge orifice (78b) is larger, preferably twice as large as the distance between adjacent discharge orifices (78) in the row, wherein, further preferably, a joint of a tamping strip (84) is arranged between the beginning and the end of the row.

11. The inflator according to one of the preceding claims, **characterized in that** the inflator has a radially projecting inflator flange (18), related to a central axis A of the inflator, for mounting the inflator to a carrier, wherein the inflator flange (18) substantially has a rectangular shape, **characterized in that** the ratio of the length I to the width b of the rectangle ranges between 1.12 and 1.31, preferably between 1.16 and 1.27 and further preferably is approx. 1.21 and/or
that the ratio of the length I of the rectangle to the outer diameter a of the external housing ranges between 1.24 and 1.48, preferably between 1.30 and 1.42 and further preferably is approx. 1.36 and/or
that the ratio of the width b of the rectangle to the outer diameter a of the external housing ranges between 1.01 and 1.23, preferably between 1.06 and 1.17 and further preferably is approx. 1.12.

12. An airbag module for a vehicle with an airbag having a volume of 40 to 60 liters, **characterized by** an inflator according to any one of the claims 1 to 11.

13. An airbag module for a vehicle with an airbag having a volume of 60 to 135 liters, **characterized by** an inflator according to any one of the claims 1 to 11.

## Revendications

1. Générateur de gaz pour un dispositif de protection de véhicule comportant un réservoir de propergol (58) rempli de propergol avec un fond du réservoir de propergol (66) et une ouverture du réservoir de propergol (64) opposée au fond du réservoir de propergol (66) qui est fermé au moyen d'un élément d'une pièce constituant chambre de combustion (60), pour lequel la pièce constituant chambre de combustion est un étui formant chambre de combustion (60),
qui ouvre au moins partiellement une chambre de combustion (56) lorsque associée à l'activation d'un étage spécifique du générateur de gaz (56),
pour lequel l'étui formant chambre de combustion (60) présente une ouverture de l'étui formant chambre de combustion ou un côté ouvert et une extrémité opposée au fond de l'étui formant chambre de combustion (72), que l'ouverture du réservoir de propergol (64) recouvre, pour lequel à la base de l'étui formant chambre de combustion (72) est disposé un deuxième compensateur de volume (76), **caractérisé en ce que** sur le fond du réservoir de propergol (66) est prévue une ouverture centrale du fond du réservoir de propergol (68) pour recevoir un élément de support et que le réservoir de propergol (58) et l'étui formant chambre de combustion (60) sont sensiblement deux étuis cylindriques ouverts, qui sont insérés l'un dans l'autre orientés de manière opposée, de sorte que la surface intérieure ou extérieure du réservoir de propergol (58) et une surface d'enveloppe extérieure ou intérieure de l'étui formant chambre de combustion (60) recouvrent sensiblement toute la longueur axiale des surfaces latérales, pour lequel l'étui formant chambre de combustion (60) est poussé à l'extérieur du réservoir de propergol (58).

2. Générateur de gaz selon la revendication 1, **caractérisé en ce que** l'ouverture du fond du réservoir de propergol (68) est réalisée, de préférence pliée, à travers une partie périphérique intérieure (70), qui se prolonge depuis le fond du réservoir de propergol (66) à l'intérieur du réservoir de propergol (58)

3. Générateur de gaz selon l'une au moins des revendications précédentes 1 à 2, **caractérisé en ce que** plusieurs trous (106) sont prévus sur le fond du réservoir de propergol (66).

4. Générateur de gaz selon au moins l'une des revendications précédentes 1 à 3, **caractérisé en ce que** l'étui formant chambre de combustion (60), en dehors de l'ouverture de l'étui formant chambre de combustion ou bien du côté ouvert, est exempt de trous.

5. Générateur de gaz selon au moins l'une des revendications précédentes 1 à 4, **caractérisé en ce que** l'étui formant chambre de combustion (60) est relié à un support allumeur (32).

6. Générateur de gaz selon au moins l'une des revendications précédentes 2 à 5, **caractérisé en ce qu'**au moins une partie d'une paroi latérale (62) du réservoir de propergol (58) s'étendant entre l'ouverture du réservoir de propergol (64) et le fond du réservoir de propergol (66) se trouve immédiatement en face au moins d'une paroi latérale (102) de l'étui formant chambre de combustion (60) s'étendant entre l'ouverture de l'étui formant chambre de combustion ou bien du côté ouvert de l'étui formant chambre de combustion (60) et le fond de l'étui formant chambre de combustion (72).

7. Générateur de gaz selon au moins l'une des revendications précédentes, **caractérisé en ce que** le générateur de gaz comprend un diffuseur (10), lequel présente un corps extérieur symétrique en rotation du générateur de gaz, de préférence avec un corps assurant la fermeture (12), ledit diffuseur (10) possède plus de 12 tuyères (78), lesquelles sont disposées sur une ligne.

8. Générateur de gaz selon la revendication 7, **caractérisé en ce que** les tuyères (78) ont au moins deux, de préférence trois sections différentes de sortie, pour lequel les différentes sections de sortie sont déterminées par différents diamètres d'orifices de tuyères (78), et que de préférence, en fonction de l'axe central A du diffuseur (10), les tuyères opposées (78) ont la même section de sortie.

9. Générateur de gaz selon au moins l'une des revendications précédentes 7 ou 8, **caractérisé en ce que** les tuyères immédiatement adjacentes (78) présentent différentes sections transversales de sortie, pour lequel les tuyères (78) ont au moins trois différentes sections de sortie et que, dans la rangée des tuyères (78) est prévu, au moins partiellement, une séquence répétitive du type : première section transversale d'écoulement, deuxième section transversale d'écoulement, première section transversale d'écoulement, troisième section transversale d'écoulement.

10. Générateur de gaz selon au moins l'une des revendications précédentes 7 à 9, **caractérisé en ce que** la rangée de tuyères (78) court selon une direction circonférentielle par rapport à un axe central A du diffuseur (10) et possède un début ayant une première tuyère (78a) ainsi qu'une fin avec une tuyère finale (78b), pour
lequel la distance entre la première tuyère (78a) et la dernière tuyère (78b) est plus grande, de préférence deux fois plus grande que la distance entre les tuyères adjacentes (78) dans la rangée, pour lequel de préférence entre le début et la fin de la rangée est disposé un morceau de bande opercule (84).

11. Générateur de gaz selon l'une quelconque des revendications précédentes, **caractérisé en ce que** le générateur de gaz possède un flasque (18) de générateur en saillie radialement par rapport un axe central A du générateur de gaz, pour la fixation du générateur de gaz sur un support, pour lequel le flasque (18) du générateur est sensiblement de la forme d'un rectangle, **caractérisé en ce que** le rapport de la longueur L sur la largeur b du rectangle est compris entre 1,12 et 1,31, de préférence entre 1,16 et 1,27 et plus préférentiellement d'environ 1,21, et/ou que le rapport de la longueur L du rectangle au diamètre extérieur a du corps extérieur se situe entre 1,24 à 1,48, de préférence 1,30 à 1,42, et plus préférentiellement est d'environ 1,36, et/ou que le rapport de la largeur b du rectangle au diamètre extérieur a du boîtier extérieur est compris entre 1,01 et 1,23, de préférence entre 1,06 et 1,17, et plus préférentiellement environ 1,12.

12. Module airbag pour un véhicule, avec un airbag d'un volume de 40 à 60 litres, **caractérisé par** un générateur de gaz selon l'une des revendications 1 à 11.

13. Module airbag pour un véhicule, avec un airbag d'un volume de 60 à 135 litres, **caractérisé par** un générateur de gaz selon l'une des revendications 1 à 11.
